# EUROPEAN PATENT APPLICATION

(11) **EP 2 725 496 A1**
(43) Date of publication of application: **30.04.2014**
(21) Application number: 11868053.7
(22) Date of filing: 21.06.2011
(51) Int. Cl.: G06F 13/14, G06F 13/00, G06F 13/10

(54) **INFORMATION PROCESSING DEVICE, VIRTUAL MACHINE CONTROL METHOD AND PROGRAM**

(71) Applicant: Fujitsu Limited, Kawasaki-shi, Kanagawa 211-8588 (JP)
(72) Inventor: MIYAUCHI, Keiji, Kawasaki-shi Kanagawa 211-8588 (JP); HORIUCHI, Toshihiro, Kawasaki-shi Kanagawa 211-8588 (JP)
(74) Representative: HOFFMANN EITLE
(86) International application number: PCT/JP2011/064125
(87) International publication number: WO 2012/176278

(57) **Abstract**

An interface section included in an information processing apparatus can be maintained smoothly.

A storage section (1e) stores information indicative of an interface section (1c), of the interface sections (1c, 1d), used by virtual machines (1a and 1b) for access. When an error occurs in access performed by the virtual machine (1a) by the use of the interface section (1c), a control section (1f) refers to the storage section (1e) and specifies the virtual machine (1b) which uses the interface section (1c). The control section (1f) switches an interface section to be used by the virtual machine (1b) from the interface section (1c) to the interface section (1d) mounted on an information processing apparatus (1).

## Description

### Technical Field

The embodiments discussed herein are related to an information processing apparatus, a virtual machine control method, and a program.

### Background Art

At present, the virtualization technique of operating a plurality of virtual computers (which may be referred to as virtual machines or logical hosts) on a physical computer (which may be referred to as a physical machine or a physical host) is used in the field of information processing. Software, such as an OS (Operating System), can be executed on each virtual machine. A physical machine using the virtualization technique executes software for managing a plurality of virtual machines.

For example, software referred to as a hypervisor assigns the processing capabilities of a CPU (Central Processing Unit) or storage areas of a RAM (Random Access Memory) to a plurality of virtual machines as operation resources. Furthermore, for example, the hypervisor may assign the processing capabilities of an interface section, such as a NIC (Network Interface Card) or an HBA (Host Bus Adapter), to the plurality of virtual machines as communication resources. Each virtual machine uses a communication resource assigned thereto for accessing a device via the interface section.

A storage system in which a host adapter connected to a CPU, a disk adapter connected to a storage unit, and a common bus are duplexed and in which a fall-back can be performed at the time of the occurrence of a failure is proposed. Furthermore, an information processing apparatus in which an adapter block including a plurality of adapters is duplexed and in which an adapter to be used is switched by the adapter block at the time of the occurrence of a failure in one adapter in one adapter block is proposed. In addition, a virtual machine system in which an I/O (Input/Output) request from a virtual machine in which a failure occurs many times is intercepted at the time of a plurality of virtual machines sharing an HBA for curbing an influence on I/O requests from the other virtual machines is proposed.

### Citation List

### Patent Literature

PTL1: Japanese Laid-open Patent Publication No. 2004-303256
PTL2: Japanese Laid-open Patent Publication No. 10-312301
PTL3: Japanese Laid-open Patent Publication No. 2009-294758

### Summary of Invention

### Technical Problem

By the way, as stated above, two or more virtual machines may share an interface section for access to a device on an information processing apparatus on which a plurality of virtual machines operate. Even when an error occurs in access which one virtual machine performs by the use of the interface section, an error may not occur in the other virtual machines. For example, if a resource, such as a memory area, included in the interface section is divided and is assigned to the two or more virtual machines, a failure may occur only in a memory area assigned to a virtual machine.

However, if an error is detected only in a part of two or more virtual machines which share an interface section, it is not easy to maintain the interface section. For example, in many cases a virtual machine is separated from another virtual machine so that information processing by it will not interfere with information processing by another virtual machine. Unless a virtual machine detects an error, it may continue to use the interface section regardless of conditions under which an error is detected by another virtual machine. In this state of things maintenance, such as stoppage or replacement, of the interface section in which the error is detected may fail to be performed smoothly.

The present invention was made under the circumstances described above. An object of the present invention is to provide an information processing apparatus, a virtual machine control method, and a program which can smoothly maintain an interface section included in the information processing apparatus.

### Solution to Problem

There is provided an information processing apparatus on which a plurality of virtual machines can operate and on which a plurality of interface sections used for access from the plurality of virtual machines to a device can be mounted. This information processing apparatus includes a storage section and a control section. The storage section stores information indicative of an interface section, of the plurality of interface sections, used by each of the plurality of virtual machines for access. When an error occurs in access which a first virtual machine performs by the use of a first interface section, the control section refers to the storage section, specifies a second virtual machine which uses the first interface section, and switches an interface section to be used by the second virtual machine from the first interface section to a second interface section mounted on the information processing apparatus.

Furthermore, there is provided a virtual machine control method adopted by an information processing apparatus on which a plurality of virtual machines can operate and on which a plurality of interface sections used for access from the plurality of virtual machines to a device can be mounted or another information processing apparatus which communicates with the information processing apparatus. This virtual machine control method includes detecting that an error occurs in access performed by a first virtual machine by the use of a first interface section, referring to a storage apparatus which stores information indicative of an interface section, of the plurality of interface sections, used by each of the plurality of virtual machines for access and specifying a second virtual machine which uses the first interface section, and switching an interface section to be used by the second virtual machine from the first interface section to a second interface section mounted on the information processing apparatus.

In addition, there is provided a program for controlling a computer on which a plurality of virtual machines can operate and on which a plurality of interface sections used for access from the plurality of virtual machines to a device can be mounted. This program makes the computer or another computer which communicates with the computer detect that an error occurs in access performed by a first virtual machine by the use of a first interface section, refer to a storage apparatus which stores information indicative of an interface section, of the plurality of interface sections, used by each of the plurality of virtual machines for access and specify a second virtual machine which uses the first interface section, and switch an interface section to be used by the second virtual machine from the first interface section to a second interface section mounted on the computer.

### Advantageous Effects of Invention

According to the above information processing apparatus, virtual machine control method, and program, an interface section included in the information processing apparatus can smoothly be maintained.

The above and other objects, features and advantages of the present invention will become apparent from the following description when taken in conjunction with the accompanying drawings which illustrate preferred embodiments of the present invention by way of example.

### Brief Description of Drawings

[FIG. 1] FIG. 1 illustrates an information processing apparatus according to a first embodiment.
[FIG. 2] FIG. 2 illustrates the entire structure of an information processing system according to a second embodiment.
[FIG. 3] FIG. 3 indicates an example of hardware of a server apparatus in the second embodiment.
[FIG. 4] FIG. 4 indicates an example of hardware of an FC switch apparatus in the second embodiment.
[FIG. 5] FIG. 5 indicates an example of hardware of a storage apparatus in the second embodiment.
[FIG. 6] FIG. 6 indicates an example of the arrangement of virtual machines.
[FIG. 7] FIG. 7 is a block diagram of an example of assignment of hardware.
[FIG. 8] FIG. 8 is a block diagram of functions of the server apparatus in the second embodiment.
[FIG. 9] FIG. 9 indicates an example of a connection configuration management table.
[FIG. 10] FIG. 10 indicates an example of a redundant group management table.
[FIG. 11] FIG. 11 is a flow chart of an entire process at failure detection time in the second embodiment.
[FIG. 12] FIG. 12 is a sequence diagram of an entire process at failure detection time in the second embodiment.
[FIG. 13] FIG. 13 is a flow chart of a physical adapter addition process in the second embodiment.
[FIG. 14] FIG. 14 is a sequence diagram of the physical adapter addition process in the second embodiment.
[FIG. 15] FIG. 15 is a flow chart of a connection destination apparatus addition process in the second embodiment.
[FIG. 16] FIG. 16 is a sequence diagram of the connection destination apparatus addition process in the second embodiment.
[FIG. 17] FIG. 17 is a flow chart of an adapter switching process in the second embodiment.
[FIG. 18] FIG. 18 is a block diagram of functions of a server apparatus in a third embodiment.
[FIG. 19] FIG. 19 is a block diagram of functions of a management terminal apparatus in a fourth embodiment.
[FIG. 20] FIG. 20 is a sequence diagram of an entire process at failure detection time in the fourth embodiment.
[FIG. 21] FIG. 21 is a block diagram of functions of an FC switch apparatus in a fifth embodiment.
[FIG. 22] FIG. 22 is a sequence diagram of an entire process at failure detection time in the fifth embodiment.
[FIG. 23] FIG. 23 is a block diagram of functions of a storage apparatus in a sixth embodiment.
[FIG. 24] FIG. 24 is a sequence diagram of an entire process at failure detection time in the sixth embodiment.
[FIG. 25] FIG. 25 is a block diagram of functions of a server apparatus in a seventh embodiment.

### Description of Embodiments

Embodiments will now be described with reference to the drawings.

### (First Embodiment)

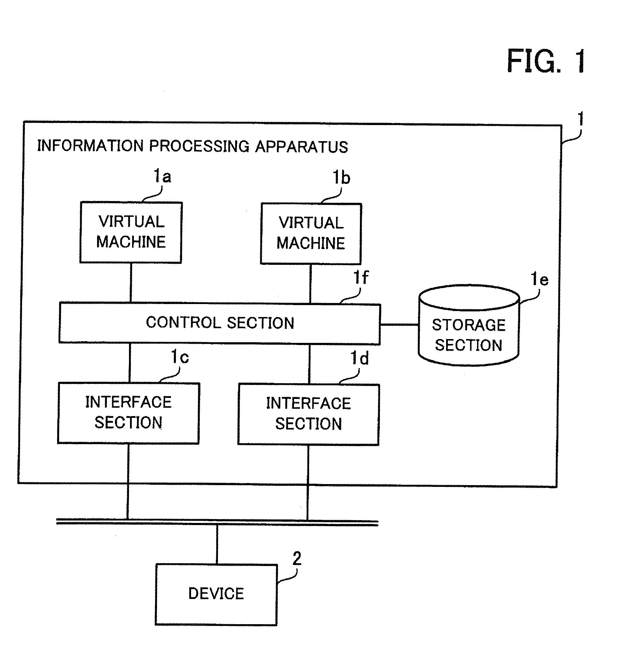

FIG. 1 illustrates an information processing apparatus according to a first embodiment. A plurality of virtual machines including virtual machines 1a and 1b can operate on an information processing apparatus 1 according to a first embodiment. Furthermore, the information processing apparatus 1 can include a plurality of interface sections including interface sections 1c and 1d which are used for access from the plurality of virtual machines to a device 2. The device 2 is, for example, a communication device, a storage device, or another information processor. The information processing apparatus 1 includes the interface sections 1c and 1d, a storage section 1e, and a control section 1f.

Each of the interface sections 1c and 1d performs signal processing and is used for access from the virtual machines 1a and 1b to the device 2. Adapters, such as NICs or HBAs, may be used as the interface sections 1c and 1d. The interface sections 1c and 1d and the device 2 may be connected directly by a cable or be connected via a relay device such as a switch. The interface section 1d may be a spare used at the time of the occurrence of a failure in the interface section 1c or be added to the information processing apparatus 1 after the occurrence of a failure in the interface section 1c.

The storage section 1e stores information indicative of an interface section, of the plurality of interface sections which can be mounted on the information processing apparatus 1, used by each of the plurality of virtual machines for access. An NVRAM (NonVolatile RAM), a RAM, or an HDD (Hard Disk Drive) may be used as the storage section 1e. In the first embodiment it is assumed that when the interface sections 1c and 1d are operating normally, the virtual machines 1a and 1b use the interface section 1c for accessing the device 2.

The control section 1f controls assignment of the interface sections 1c and 1d to the plurality of virtual machines which operate on the information processing apparatus 1. The control section 1f may be realized as a program executed by the use of a CPU and a RAM or be realized as a module in a hypervisor. The control section 1f detects that an error occurs in access which the virtual machine 1a performs by the use of the interface section 1c. At this time the control section 1f refers to the storage section 1e and specifies the virtual machine 1b other than the virtual machine 1a which uses the interface section 1c. The control section 1f switches an interface section to be used by the virtual machine 1b from the interface section 1c to the interface section 1d. The control section 1f may also switch an interface section to be used by the virtual machine 1a from the interface section 1c to the interface section 1d.

Of a plurality of resources (a plurality of memory areas, for example) included in the interface section 1c, the control section 1f may assign a first resource to the virtual machine 1a and assign a second resource to the virtual machine 1b When an error occurs in access which the virtual machine 1a performs by the use of the first resource, the control section 1f can switch an interface section to be used by the virtual machine 1b even if an error does not occur for the second resource.

Furthermore, the control section 1f may exercise control so that switching to the interface section 1d will be performed at timing at which the virtual machine 1b is not accessing the device 2. Accordingly, the control section 1f may manage an access state by storing in the storage section 1e information indicative of whether or not the virtual machine 1b is accessing the device 2. In addition, the control section 1f may exercise control so that after confirmation that a device which can be accessed by the use of the interface section 1c can be accessed by the use of the interface section 1d is obtained, switching to the interface section 1d will be performed. Moreover, the control section 1f may detect on the basis of notice from the virtual machine 1a that an error occurs in access which the virtual machine 1a performs by the use of the interface section 1c.

In the first embodiment the storage section 1e and the control section 1f are included in the information processing apparatus 1 on which the virtual machines 1a and 1b operate. However, the storage section 1e and the control section 1f may be included in another apparatus which communicates with the information processing apparatus 1. For example, a communication apparatus, a storage apparatus, a computer, or the like which communicates with the information processing apparatus 1 may include the storage section 1e and the control section 1f and control the information processing apparatus 1. In addition, the storage section 1e may be located outside the information processing apparatus 1 (or another apparatus including the control section 1f).

With the information processing apparatus 1 according to the first embodiment the occurrence of an error is detected in access which the virtual machine 1a performs by the use of the interface section 1c. The storage section 1e which stores information indicative of an interface section, of the plurality of interface sections, used by each of the plurality of virtual machines for access is referred to and the virtual machine 1b that uses the interface section 1c in which the error occurs is specified. An interface section to be used by the specified virtual machine 1b is switched from the interface section 1c to the interface section 1d.

As a result, the interface sections 1c and 1d included in the information processing apparatus 1 on which the plurality of virtual machines can operate are maintained smoothly. For example, when the virtual machine 1a detects an error in the interface section 1c, an interface section to be used by the virtual machine 1b is switched even if the virtual machine 1b which shares the interface section 1c does not detect the error. As a result, neither the virtual machine 1a which recognizes the error nor the virtual machine 1b use the interface section 1c. Accordingly, it is easy to stop the interface section 1c and remove it from the information processing apparatus 1. Furthermore, the information processing apparatus 1 can include the plurality of interface sections, so it is possible to replace the interface section 1c without stopping the virtual machine 1b

### (Second Embodiment)

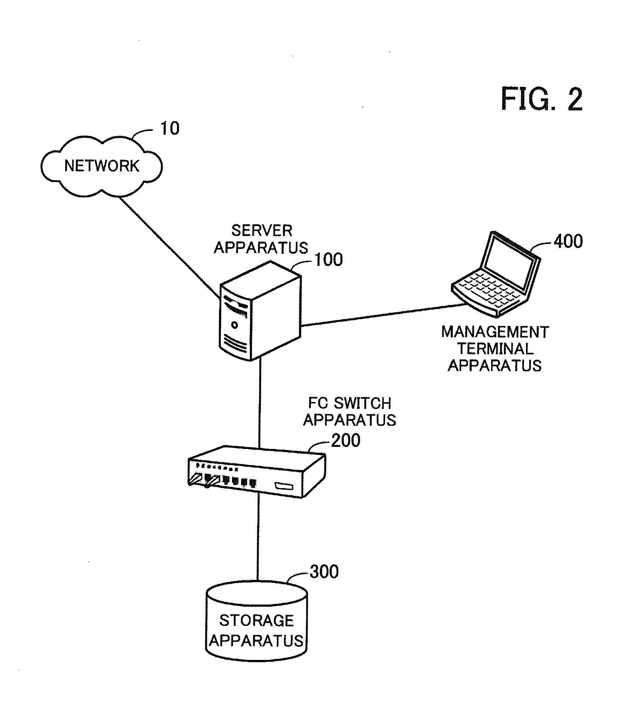

FIG. 2 illustrates the entire structure of an information processing system according to a second embodiment. This information processing system includes a server apparatus 100, an FC (Fibre Channel) switch apparatus 200, a storage apparatus 300, and a management terminal apparatus 400. The server apparatus 100 is connected to a network 10.

The server apparatus 100 is a server computer on which a plurality of virtual machines can operate. The server apparatus 100 manages starting and stopping the plurality of virtual machines. The server apparatus 100 makes a client apparatus connected to the network 10 use the function of a virtual machine via the network 10.

The FC switch apparatus 200 includes a plurality of FC interfaces and is a communication path switching apparatus which performs relay between interfaces. The FC switch apparatus 200 relays data communication between the server apparatus 100 and the storage apparatus 300. FC communication is performed between the server apparatus 100 and the FC switch apparatus 200. In addition, communication between the server apparatus 100 and the FC switch apparatus 200 may be performed via an I2C (Inter Integrated Circuit), a LAN (Local Area Network), or the like.

The storage apparatus 300 stores data and programs used by the server apparatus 100. The storage apparatus 300 transmits various pieces of data it stores to the server apparatus 100 in response to a request from the server apparatus 100. The storage apparatus 300 is an example of a connection destination apparatus for the server apparatus 100.

The management terminal apparatus 400 is a computer operated by a manager. The management terminal apparatus 400 is connected to the server apparatus 100. The management terminal apparatus 400 is used by the manager for inputting instructions to the server apparatus 100.

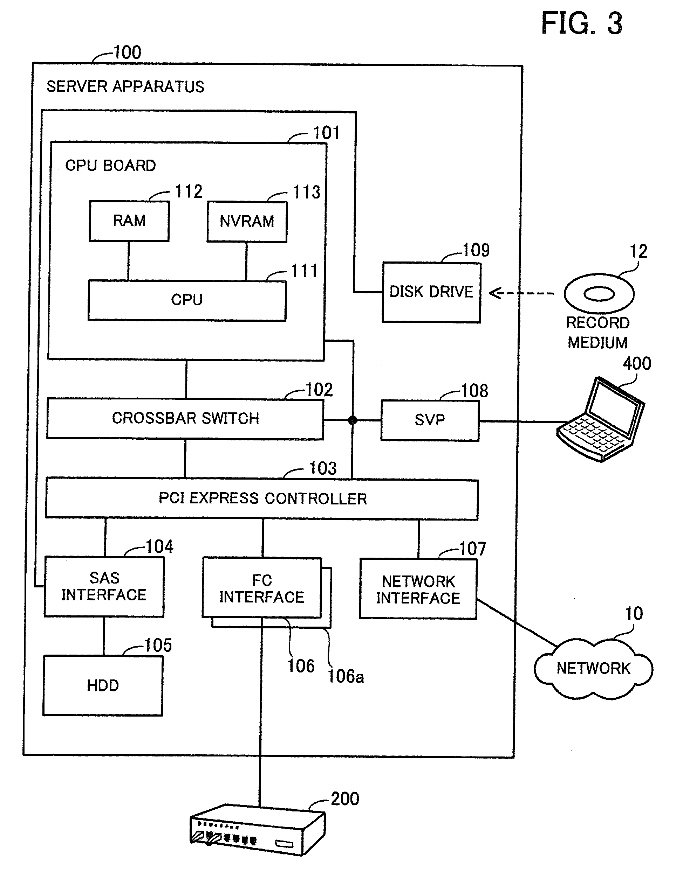

FIG. 3 indicates an example of hardware of the server apparatus in the second embodiment. The server apparatus 100 includes a CPU board 101, a crossbar switch 102, a PCI Express (Peripheral Component Interconnect Express) controller 103, a SAS (Serial Attached SCSI (Small Computer System Interface) interface 104, an HDD 105, FC interfaces 106 and 106a, a network interface 107, an SVP (Service Processor) 108, and a disk drive 109.

The CPU board 101 is an information processing section including a CPU and a memory. A CPU 111, a RAM 112, and an NVRAM 113 are mounted on the CPU board 101.

The CPU 111 is an operation unit which executes a hypervisor program, an OS program, and an application program to realize a virtual machine or an application on the virtual machine. A plurality of CPUs may be mounted on the CPU board 101.

The RAM 112 is a volatile memory which temporarily stores at least a part of a hypervisor program, an OS program, and an application program executed by the CPU 111. A plurality of RAMs may be mounted on the CPU board 101.

The NVRAM 113 is a nonvolatile memory which stores data used by a hypervisor for performing a process. A plurality of NVRAMs may be mounted on the CPU board 101.

The server apparatus 100 may include a plurality of CPU boards.

The crossbar switch 102 relays data communication between the CPU board 101 and the PCI Express controller 103.

The PCI Express controller 103 controls data communication between the crossbar switch 102 and the SAS interface 104, between the crossbar switch 102 and the FC interfaces 106 and 106a, and between the crossbar switch 102 and the network interface 107.

The SAS interface 104 is connected to the HDD 105 and the disk drive 109 and controls inputting data to or outputting data from the HDD 105 or the disk drive 109. Inputting data to or outputting data from the disk drive 109 may be controlled by encapsulating the SATA (Serial ATA) protocol.

The HDD 105 is a nonvolatile storage unit which stores a hypervisor program and data used by a hypervisor for performing a process. The HDD 105 writes to or reads from a built-in magnetic disk in accordance with an instruction from the CPU 111. The server apparatus 100 may include a nonvolatile storage unit (such as an SSD (Solid State Drive) other than an HDD or include a plurality of nonvolatile storage units. In addition, a hypervisor program executed by the CPU board 101 may be stored in the NVRAM 113.

The FC interfaces 106 and 106a are HBAs which are connected to the FC switch apparatus 200 and which control data communication between the server apparatus 100 and the FC switch apparatus 200. Each of the FC interfaces 106 and 106a includes a controller which exercises the above control.

The network interface 107 is connected to a network 10 and controls data communication performed between the server apparatus 100 and another apparatus via the network 10.

The SVP 108 is a unit for managing the server apparatus 100. The SVP 108 is connected to the CPU board 101, the crossbar switch 102, and the PCI Express controller 103 of the server apparatus 100 by an I2C or the like. The SVP 108 is connected to the management terminal apparatus 400. The SVP 108 makes the management terminal apparatus 400 display a GUI (Graphical User Interface) for managing the server apparatus 100. The manager operates the GUI on the management terminal apparatus 400 for giving the server apparatus 100 instructions.

The disk drive 109 is a drive unit which reads a program or data recorded on a record medium 12. For example, a magnetic disk, such as an FD (Flexible Disk) or an HDD, an optical disk, such as a CD (Compact Disc) or a DVD (Digital Versatile Disc), or an MO (Magneto-Optical disk) is used as the record medium 12. In accordance with, for example, an instruction from the CPU 111, the disk drive 109 stores in the RAM 112 or the HDD 105 a program or data which it reads from the record medium 12.

The management terminal apparatus 400 also includes a CPU, a ROM, a RAM, an HDD, a network interface, a disk drive, and the like. This is the same with the server apparatus 100. The CPU included in the management terminal apparatus 400 executes determined programs. By doing so, functions of the management terminal apparatus 400 are realized.

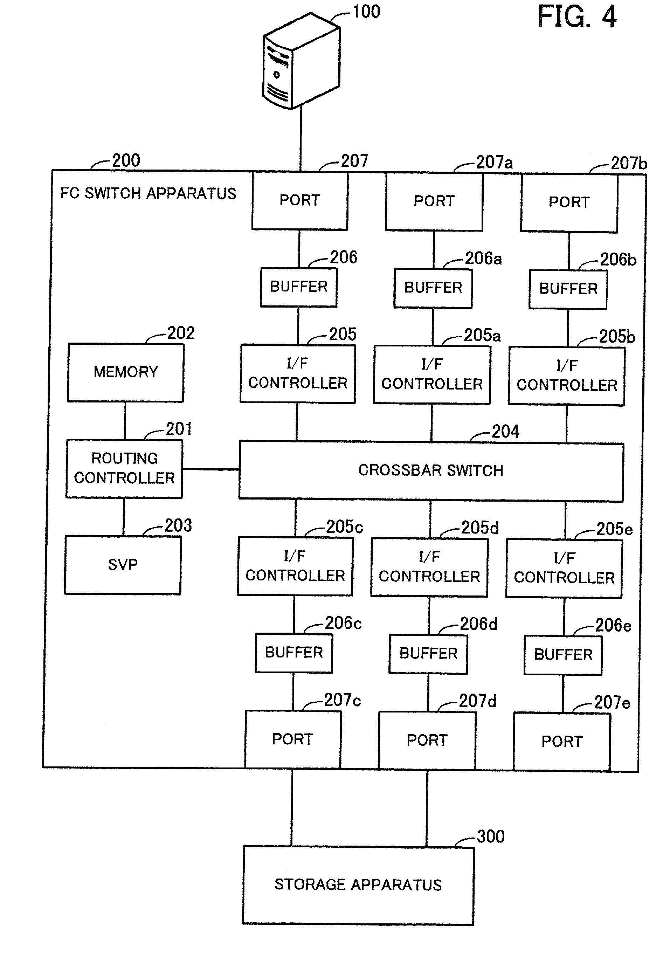

FIG. 4 indicates an example of hardware of the FC switch apparatus in the second embodiment. The FC switch apparatus 200 includes a routing controller 201, a memory 202, an SVP 203, a crossbar switch 204, I/F (InterFace) controllers 205, 205a, 205b, 205c, 205d, and 205e, buffers 206, 206a, 206b, 206c, 206d, and 206e, and ports 207, 207a, 207b, 207c, 207d, and 207e.

The I/F controller 205, the buffer 206, and the port 207 will be described later. However, the descriptions of the I/F controller 205, the buffer 206, and the port 207 also apply to the I/F controllers 205a, 205b, 205c, 205d, and 205e, the buffers 206a, 206b, 206c, 206d, and 206e, and the ports 207a, 207b, 207c, 207d, and 207e respectively.

The routing controller 201 controls data communication among a plurality of SANs (Storage Area Networks).

The memory 202 stores data used for a process performed by the routing controller 201. For example, the memory 202 stores a routing table for connecting SANs and FC zone setting information. A zone is set for dividing communication paths in the FC switch apparatus 200 and separating traffic.

The SVP 203 is a unit for managing the FC switch apparatus 200. The SVP 203 carries out various management functions (such as communication failure management and power supply management) on the FC switch apparatus 200. The SVP 203 may be connected to a management terminal apparatus (not illustrated) for managing the FC switch apparatus 200. In that case, the SVP 203 can make the management terminal apparatus display a GUI for management. The manager can operate the GUI for inputting instructions to the FC switch apparatus 200. In addition, the SVP 203 includes a memory for storing a program and data used for a process performed by the SVP 203. The program and the data may be stored in the memory 202.

The crossbar switch 204 relays data communication performed between the apparatus via ports.

The I/F controller 205 controls a data flow between ports.

The buffer 206 is a storage area for temporarily storing data to control a data flow.

The port 207 is an adapter for making a connection to an external apparatus. The port 207 is connected to the server apparatus 100 via an FC cable. The port 207c is connected to the storage apparatus 300 via an FC cable. The port 207d is connected to the storage apparatus 300 via an FC cable.

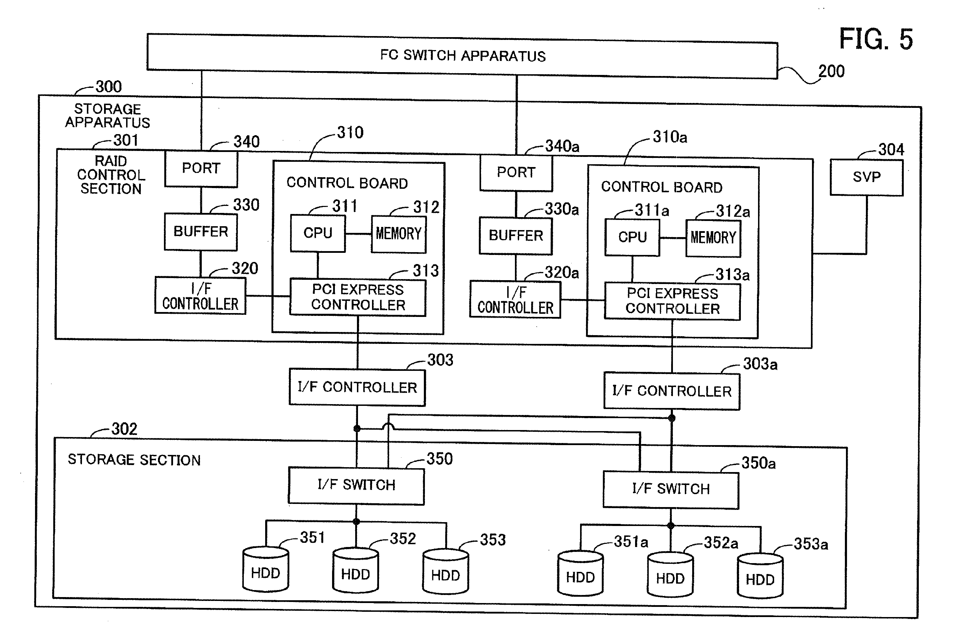

FIG. 5 indicates an example of hardware of the storage apparatus in the second embodiment. The storage apparatus 300 includes a RAID (Redundant Arrays of Inexpensive Disks) control section 301, a storage section 302, I/F controllers 303 and 303a, and an SVP 304.

The RAID control section 301 is a unit for realizing RAID. The RAID control section 301 makes a virtual machine on the server apparatus 100 use a plurality of HDDs included in the storage section 302 as one logical storage unit. The RAID control section 301 includes control boards 310 and 310a, I/F controllers 320 and 320a, buffers 330 and 330a, and ports 340 and 340a.

The control boards 310 and 310a are placed according to the ports. In response to a request received from the server apparatus 100 via the port 340 or 340a, the control board 310 or 310a accesses the storage section 302 and reads or writes data. The control board 310 includes a CPU 311, a memory 312, and a PCI Express controller 313.

The CPU 311 controls a process performed by the control board 310.

The memory 312 stores data used for a process performed by the CPU 311.

The PCI Express controller 313 is connected to the storage section 302 via the I/F controller 303. The PCI Express controller 313 is connected to the I/F controller 320. The PCI Express controller 313 relays communication between interfaces.

The control board 310a includes a CPU 311a, a memory 312a, and a PCI Express controller 313a. The CPU 311a, the memory 312a, and the PCI Express controller 313a correspond to the CPU 311, the memory 312, and the PCI Express controller 313 respectively.

The I/F controller 320 controls the flow of data inputted from or outputted to the port 340. Similarly, the I/F controller 320a controls the flow of data inputted from or outputted to the port 340a.

The buffer 330 controls a data flow between the I/F controller 320 and the port 340. Similarly, the buffer 330a controls a data flow between the I/F controller 320a and the port 340a.

The port 340 is an adapter for making a connection to an external apparatus. The port 340 is connected to the port 207c of the FC switch apparatus 200 via an FC cable. The port 340a is connected to the port 207d of the FC switch apparatus 200 via an FC cable.

The storage section 302 includes I/F switches 350 and 350a and HDDs 351, 351a, 352, 352a, 353, and 353a.

The I/F switch 350 or 350a controls communication between an HDD accessed by the control board 310 or 310a and the I/F controller 303 or 303a.

In accordance with an instruction from the CPU 311 or 311a, each of the HDDs 351, 351a, 352, 352a, 353, and 353a writes to or reads from a built-in magnetic disk. The HDDs 351, 352, and 353 are connected to the I/F switch 350. The HDDs 351a, 352a, and 353a are connected to the I/F switch 350a. The storage section 302 may include nonvolatile storage units (such as SSDs) other than HDDs.

The I/F controller 303 or 303a relays data communication between the RAID control section 301 and the storage section 302. The I/F controller 303 is connected to the PCI Express controller 313 and the I/F switches 350 and 350a. The I/F controller 303a is connected to the PCI Express controller 313a and the I/F switches 350 and 350a.

The SVP 304 is a unit for managing the storage apparatus 300. The SVP 304 carries out various functions (such as disk failure management and power supply management) on the storage apparatus 300. The SVP 304 may be connected to a management terminal apparatus (not illustrated) for managing the storage apparatus 300. In that case, the SVP 304 can make the management terminal apparatus display a GUI for management. The manager can operate the GUI for inputting instructions to the storage apparatus 300. In addition, the SVP 304 includes a memory for storing a program and data used for a process performed by the SVP 304.

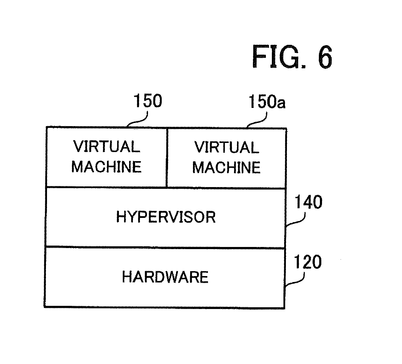

FIG. 6 indicates an example of the arrangement of virtual machines. The server apparatus 100 includes hardware 120, a hypervisor 140, and virtual machines 150 and 150a.

The hardware 120 is a physical resource included in the server apparatus 100. The hardware 120 includes a CPU board 101, a PCI Express controller 103, a SAS interface 104, an HDD 105, FC interfaces 106 and 106a, a network interface 107, and a disk drive 109.

The hypervisor 140 realizes virtual machines. The hypervisor 140 assigns the hardware 120 to each virtual machine and controls starting and stopping each virtual machine. Furthermore, the hypervisor 140 arbitrates access from each virtual machine to the hardware 120 so that the virtual machines can jointly use the hardware 120. In addition, the hypervisor 140 monitors a state in which the hardware 120 assigned to each virtual machine is used.

The virtual machines 150 and 150a are realized on the server apparatus 100 by the hypervisor 140. The virtual machines 150 and 150a execute OSes independently of each other. The OSes executed by the virtual machines 150 and 150a may be the same or be different from each other. Furthermore, three or more virtual machines may operate on the server apparatus 100.

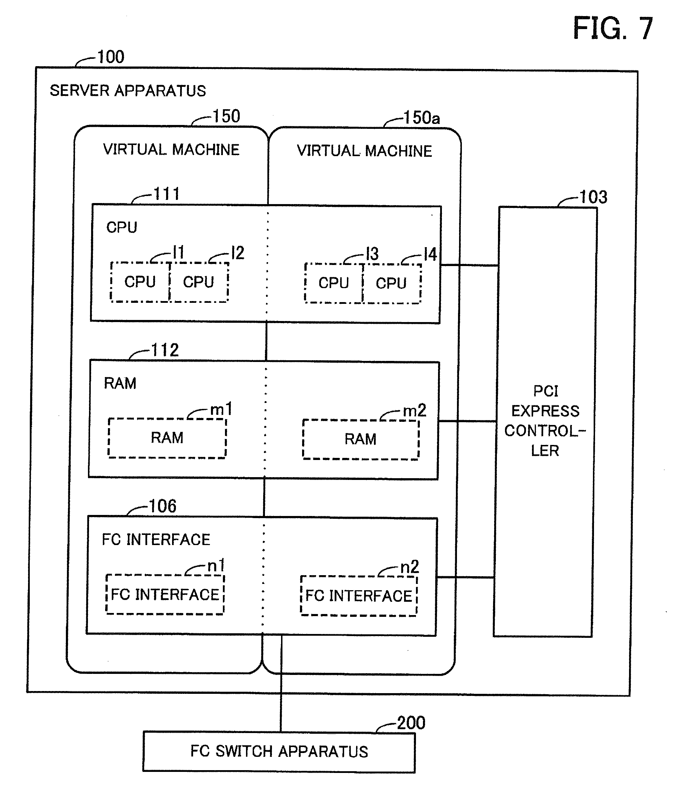

FIG. 7 is a block diagram of an example of assignment of the hardware. The virtual machines 150 and 150a are realized by resources obtained by logically dividing the hardware 120 of the server apparatus 100. FIG. 7 illustrates a CPU 111, a RAM 112, and an FC interface 106 as main components included in the hardware 120.

The CPU 111 is time-divided into CPU resources 11, 12, 13, and 14. The CPU 111 may be region-divided. For example, the CPU resources 11 and 12 are assigned to the virtual machine 150 and the CPU resources 13 and 14 are assigned to the virtual machine 150a.

The RAM 112 is region-divided into RAM resources m1 and m2. For example, the RAM resource m1 is assigned to the virtual machine 150 and the RAM resource m2 is assigned to the virtual machine 150a.

The FC interface 106 is divided into FC interface resources n1 and n2. For example, the FC interface resources n1 and n2 include resources obtained by time-dividing the processing capability of a controller in the FC interface 106. For example, the FC interface resources n1 and n2 also include resources obtained by region-dividing a physical memory in the FC interface 106 secured for a buffer. For example, the FC interface resource n1 is assigned to the virtual machine 150 and the FC interface resource n2 is assigned to the virtual machine 150a. If the FC interface 106 is a physical HBA, then the FC interface resources n1 and n2 are virtual HBAs realized on the physical HBA.

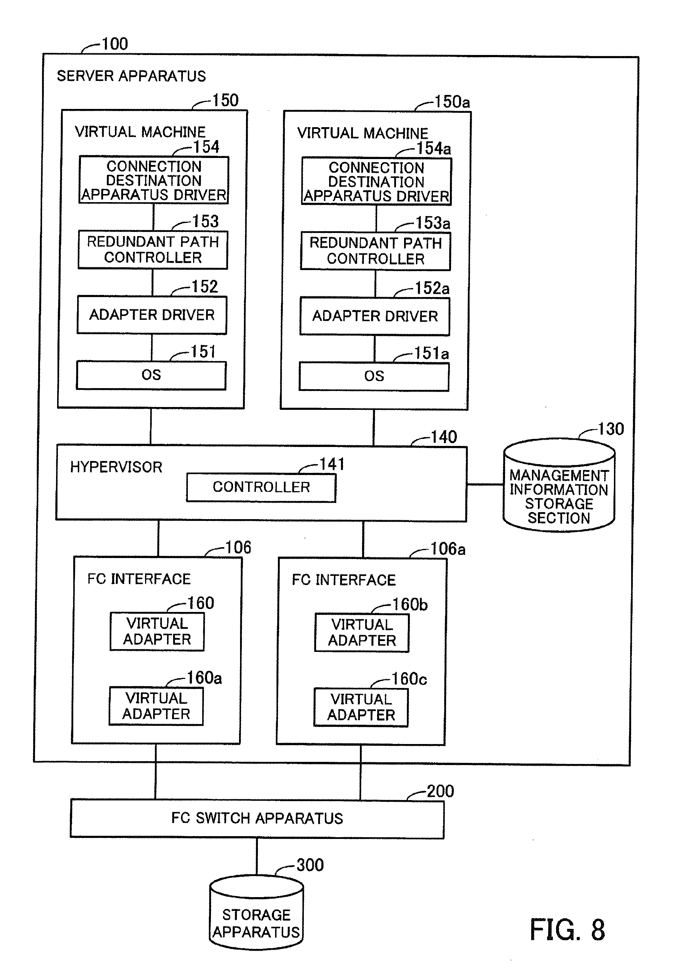

FIG. 8 is a block diagram of functions of the server apparatus in the second embodiment. The server apparatus 100 includes a management information storage section 130, the hypervisor 140, the virtual machines 150 and 150a, and virtual adapters 160, 160a, 160b, and 160c.

The CPU 111 executes determined programs. By doing so, the functions of the management information storage section 130, the hypervisor 140, and the virtual machines 150 and 150a are realized on the server apparatus 100. In addition, the controller in the FC interface 106 executes determined programs. By doing so, the functions of the virtual adapters 160 and 160a are realized on the FC interface 106. Furthermore, a controller in an FC interface 106a executes determined programs. By doing so, the functions of the virtual adapters 160b and 160c are realized on the FC interface 106a. However, all or a part of these components may be realized by dedicated hardware.

The management information storage section 130 stores management information. The management information includes a connection configuration management table and a redundant group management table. Data in the connection configuration management table is for managing the correspondence between a virtual machine and a virtual adapter. Data in the redundant group management table is for managing a redundant group made up of a plurality of virtual adapters.

The hypervisor 140 includes a controller 141. The controller 141 controls a communication path of the virtual machine 150 or 150a. When the controller 141 receives from a virtual machine notice to the effect that a failure has occurred in communication performed via an FC interface, the controller 141 refers to the management information storage section 130 and specifies a second virtual machine that performs communication by the use of the FC interface. The controller 141 assigns the specified second virtual machine to another interface.

The virtual machine 150 includes an OS 151, an adapter driver 152, a redundant path controller 153, and a connection destination apparatus driver 154.

The OS 151 is a basic program which operates on the virtual machine 150.

The adapter driver 152 is software for using a virtual adapter on the OS 151.

The redundant path controller 153 is software for realizing virtual adapter redundancy to improve the reliability of a communication path of the virtual machine 150. The redundant path controller 153 manages a plurality of virtual adapters by separating them into a currently used virtual adapter and a standby virtual adapter. When a failure occurs in the currently used virtual adapter and the virtual machine 150 is unable to perform communication, the redundant path controller 153 switches a virtual adapter to be used by the virtual machine 150 to the standby virtual adapter. In addition, when the controller 141 gives the redundant path controller 153 instructions, even in the case of a failure in the currently used virtual adapter not being detected, to switch a virtual adapter, the redundant path controller 153 switches a virtual adapter to be used by the virtual machine 150 to the standby virtual adapter.

The connection destination apparatus driver 154 is driver software for using the storage apparatus 300 on the virtual machine 150.

Furthermore, the virtual machine 150a includes an OS 151a, an adapter driver 152a, a redundant path controller 153a, and a connection destination apparatus driver 154a. The OS 151a, the adapter driver 152a, the redundant path controller 153a, and the connection destination apparatus driver 154a correspond to the OS 151, the adapter driver 152, the redundant path controller 153, and the connection destination apparatus driver 154 respectively.

The virtual adapters 160 and 160a are data communication virtual adapters realized by resources on the FC interface 106. Similarly, the virtual adapters 160b and 160c are data communication virtual adapters realized by resources on the FC interface 106a.

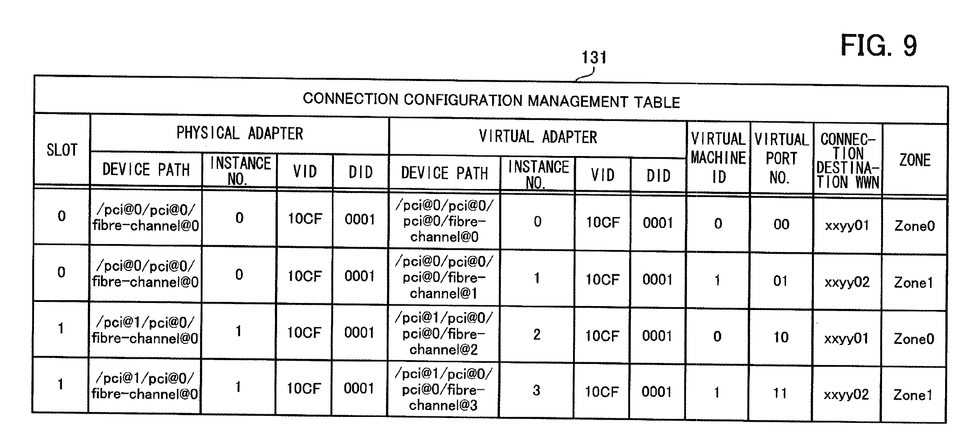

FIG. 9 indicates an example of a connection configuration management table. A connection configuration management table 131 includes Slot, Physical Adapter, Virtual Adapter, Virtual Machine ID (IDentifier), Virtual Port No., Connection Destination WWN (World Wide Name), and Zone items. Pieces of information in these items arranged in a horizontal direction are associated with one another and indicate a correspondence between a virtual machine and a virtual adapter.

A PCI slot ID of a PCI slot into which a physical adapter is inserted is set in the Slot item.

Information regarding a physical adapter is set in the Physical Adapter item. The Physical Adapter item includes Device Path, Instance No., VID (Vendor ID), and DID (Device ID) subitems. Information regarding a device path for accessing a physical adapter is set in the Device Path subitem. A function identification number (physical port number) of the physical adapter is set in the Instance No. subitem. If there are a plurality of physical ports for a function identification number of a physical adapter, then not only an instance number but also a physical port number may be managed. A VID for identifying a vendor which manufactured the physical adapter is set in the VID subitem. If the same vendor manufactured physical adapters, then the same VID is set in the VID subitem. A DID for identifying a device (function) of the physical adapter is set in the DID subitem. A DID is an ID for uniquely identifying a physical adapter in the server apparatus 100. Information regarding a virtual adapter is set in the Virtual Adapter item. The Virtual Adapter item includes Device Path, Instance No. (identification number assigned to a function of a virtual adapter), VID, and DID subitems. Contents set in these subitems are the same as those set in the above subitems for a physical adapter. In addition, an SVID (Sub Vendor ID) or an SDID (Sub Device ID) may be used.

An ID of a virtual machine associated with a corresponding virtual adapter is set in the Virtual Machine ID item. An identification number of a virtual port on a corresponding physical adapter is set in the Virtual Port No. item. A WWN of an FC interface in a connection destination storage apparatus is set in the Connection Destination WWN item. An ID of a zone on the FC switch apparatus 200 to which a communication path belongs is set in the Zone item.

For example, the following correspondences between a virtual machine and a virtual adapter on an FC interface are set in the connection configuration management table 131.
(1) correspondence between the virtual machine 150 and the virtual adapter 160
(2) correspondence between the virtual machine 150a and the virtual adapter 160a
(3) correspondence between the virtual machine 150 and the virtual adapter 160b
(4) correspondence between the virtual machine 150a and the virtual adapter 160c

A concrete description will now be given.

With correspondence (1) the following information is set in the connection configuration management table 131. A slot is "0". The device path "/pci@0/pci@0/fibre-channel@0", the instance number "0", the VID "10CF", and the DID "0001" are set for a physical adapter. The device path "/pci@0/pci@0/pci@0/fibre-channel@0", the instance number "0", the VID "10CF", and the DID "0001" are set for a virtual adapter. A virtual machine ID is "0". A virtual port number is "00". A connection destination WWN is "xxyy01" A zone is "Zone0".

The meaning of the above information is as follows. The FC interface 106 is connected to a PCI slot "0". A device path, an instance number, a VID, and a DID of the FC interface 106 are set in the above information. Furthermore, a device path, a port number, a VID, and a DID of the virtual adapter 160 are set in the above information. In addition, the virtual machine 150 (whose virtual machine ID is "0") is associated with the virtual adapter 160. Moreover, a virtual port whose virtual port number is "00" is assigned in the FC interface 106. "xxyy01" is designated as a WWN of an apparatus which is a connection destination via the virtual adapter 160. Furthermore, a communication path set by the virtual adapter 160 belongs to a zone "Zone0" managed by the FC switch apparatus 200.

With correspondence (2) the following information is set in the connection configuration management table 131. A slot is "0". The device path "/pci@0/pci@0/fibre-channel@0", the instance number "0", the VID "10CF", and the DID "0001" are set for a physical adapter. The device path "/pci@0/pci@0/pci@0/fibre-channel@1", the instance number "1", the VID "10CF", and the DID "0001" are set for a virtual adapter. A virtual machine ID is "1". A virtual port number is "01". A connection destination WWN is "xxyy02". A zone is "Zone1".

With correspondence (3) the following information is set in the connection configuration management table 131. A slot is "1". The device path "/pci@1/pci@0/fibre-channel@0", the instance number "1", the VID "10CF", and the DID "0001" are set for a physical adapter. The device path /pci@1/pci@0/pci@0/fibre-channel@2", the instance number "2", the VID "10CF", and the DID "0001" are set for a virtual adapter. A virtual machine ID is "0". A virtual port number is "10". A connection destination WWN is "xxyy01". A zone is "Zone0".

With correspondence (4) the following information is set in the connection configuration management table 131. A slot is "1". The device path "/pci@1/pci@0/fibre-channel@0", the instance number "1", the VID "10CF", and the DID "0001" are set for a physical adapter. The device path "/pci@1/pci@0/pci@0/fibre-channel@3", the instance number "3", the VID "10CF", and the DID "0001" are set for a virtual adapter. A virtual machine ID is "1". A virtual port number is "11". A connection destination WWN is "xxyy02". A zone is "Zone1".

The connection destination WWN "xxyy01" corresponds to the port 340 of the storage apparatus 300. The connection destination WWN "xxyy02" corresponds to the port 340a of the storage apparatus 300.

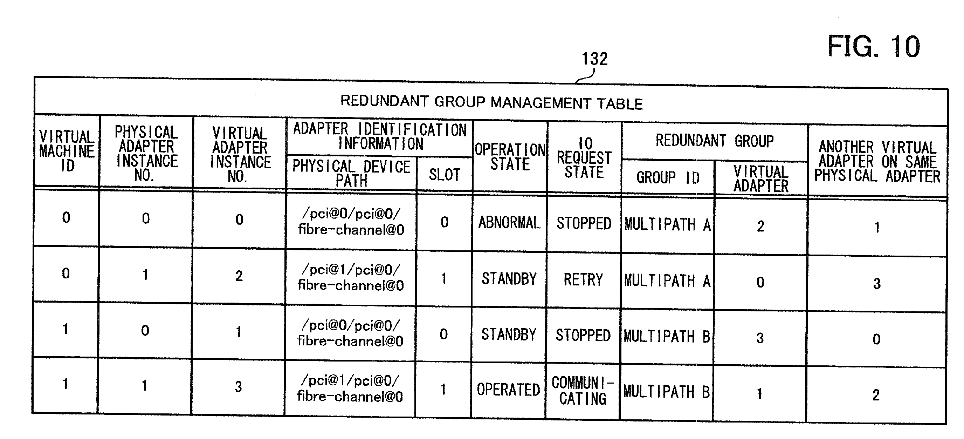

FIG. 10 indicates an example of a redundant group management table. A redundant group management table 132 includes Virtual Machine ID, Physical Adapter Instance No., Virtual Adapter Instance No., Adapter Identification Information, Operation State, IO (Input/Output) Request State, Redundant Group, and Another Virtual Adapter on Same Physical Adapter items. Pieces of information in these items arranged in a horizontal direction are associated with one another and indicate information for one redundant group.

A virtual machine ID is set in the Virtual Machine ID item. A physical adapter instance number is set in the Physical Adapter Instance No. item. A physical adapter instance number is a function number (physical port number) of a physical adapter. A virtual adapter instance number is set in the Virtual Adapter Instance No. item. A virtual adapter instance number is a function number (number for identifying a virtual function) of a virtual adapter.

Information regarding an adapter used for access to a connection destination apparatus is set in the Adapter Identification Information item. The Adapter Identification Information item further includes Physical Device Path and Slot subitems. Information regarding a device path of a physical adapter is set in the Physical Device Path subitem. A PCI slot ID of a PCI slot into which the physical adapter is inserted is set in the Slot subitem. Information indicative of a state in which data communication via a corresponding virtual adapter is operated is set in the Operation State item. Information indicative of a state of an IO request in data communication via a corresponding virtual adapter is set in the IO Request State item.

Information regarding a redundant group (combination of virtual adapters) to which a corresponding virtual adapter belongs is set in the Redundant Group item. The Redundant Group item further includes Group ID and Virtual Adapter subitems. A group ID of a redundant group is set in the Group ID subitem. A virtual adapter instance number of a virtual adapter paired with a corresponding virtual adapter in the redundant group is set in the Virtual Adapter subitem.

A virtual adapter instance number of another virtual adapter on an FC interface to which a corresponding virtual adapter belongs is set in the Another Virtual Adapter on Same Physical Adapter item.

For example, the following redundant groups are formed from the virtual adapters in the redundant group management table 132.
(1) First redundant group in which the virtual adapters 160 and 160b are paired. The first redundant group is assigned to the virtual machine 150.
(2) Second redundant group in which the virtual adapters 160a and 160c are paired. The second redundant group is assigned to the virtual machine 150a.

A concrete description will now be given.

With the first redundant group (virtual adapter 160 side) the following information is set in the redundant group management table 132. A virtual machine ID is "0". A physical adapter instance number is "0". A virtual adapter instance number is "0". The physical device path "/pci@0/pci@0/fibre-channel@0" and the slot "0" are set as adapter identification information. An operation state is "abnormal". An IO request state is "stopped". The group ID "multipath A" and the ID "2" of the virtual adapter paired with the virtual adapter 160 are set for a redundant group. A virtual adapter instance number of another virtual adapter on the same physical adapter is "1".

The meaning of the above information is as follows. The virtual adapter 160 (whose virtual adapter instance number is "0") on the FC interface 106 (whose physical adapter instance number is "0") is assigned to the virtual machine 150. The above physical device path and slot number are set as information for identifying a physical adapter. Furthermore, an operation state of the virtual adapter 160 is "abnormal" and an IO request state is "stopped". In addition, a group ID of a redundant group to which the virtual adapter 160 belongs is "multipath A" and a virtual adapter paired with the virtual adapter 160 is the virtual adapter 160b (whose virtual adapter instance number is "2"). Moreover, another virtual adapter on the FC interface 106 is the virtual adapter 160a (whose virtual adapter instance number is "1").

With the first redundant group (virtual adapter 160b side) the following information is set in the redundant group management table 132. A virtual machine ID is "0". A physical adapter instance number is "1". A virtual adapter instance number is "2". The physical device path "/pci@1/pci@0/fibre-channel@0" and the slot "1" are set as adapter identification information. An operation state is "standby". An IO request state is "retry". The group ID "multipath A" and the virtual adapter instance number "0" of the virtual adapter paired with the virtual adapter 160b are set for a redundant group. A virtual adapter instance number of another virtual adapter on the same physical adapter is "3".

With the second redundant group (virtual adapter 160a side) the following information is set in the redundant group management table 132. A virtual machine ID is "1". A physical adapter instance number is "0". A virtual adapter instance number is "1". The physical device path "/pci@0/pci@0/fibre-channel@0" and the slot "0" are set as adapter identification information. An operation state is "standby". An IO request state is "stopped". The group ID "multipath B" and the virtual adapter instance number "3" of the virtual adapter paired with the virtual adapter 160a are set for a redundant group. A virtual adapter instance number of another virtual adapter on the same physical adapter is "0".

With the second redundant group (virtual adapter 160c side) the following information is set in the redundant group management table 132. A virtual machine ID is "1". A physical adapter instance number is "1". A virtual adapter instance number is "3". The physical device path "/pci@1/pci@0/fibre-channel@0" and the slot "1" are set as adapter identification information. An operation state is "operated". An IO request state is "communicating". The group ID "multipath B" and the virtual adapter instance number "1" of the virtual adapter paired with the virtual adapter 160c are set for a redundant group. A virtual adapter instance number of another virtual adapter on the same physical adapter is "2"**.**

The meaning of each piece of information set in the Operation State item is as follows. "abnormal" indicates that a breakdown or a failure occurs in a corresponding virtual adapter. "standby" indicates that a corresponding virtual adapter is a standby virtual adapter in a redundant group. "operated" indicates that a corresponding virtual adapter is a currently used virtual adapter in a redundant group and that it is in a state in which it can be used for communication.

Furthermore, the meaning of each piece of information set in the IO Request State item is as follows. "stopped" indicates that IO (operation of transmitting or receiving data) does not occur in a corresponding virtual adapter. "retry" indicates that communication via a corresponding virtual adapter is being retried. "communicating" indicates that communication via a corresponding virtual adapter is established and that it is in a state in which it is in use for the communication.

A procedure for a process performed by the server apparatus 100 having the above structure will now be described.

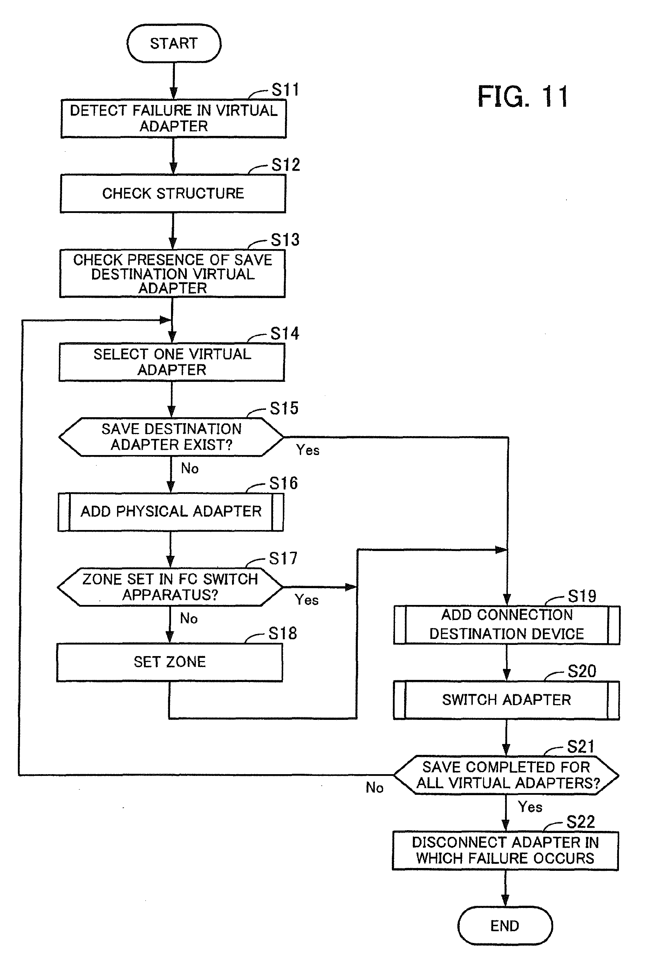

FIG. 11 is a flow chart of an entire process at failure detection time in the second embodiment. A process indicated in FIG. 11 will now be described in order of step number. It is assumed that the virtual machines 150 and 150a are accessing the storage apparatus 300 via the virtual adapters 160 and 160a, respectively, just before the following step S11.

(Step S11) The adapter driver 152 detects a failure by communication via the virtual adapter 160. The adapter driver 152 gives the hypervisor 140 notice by interprocess communication that the adapter driver 152 detects the failure in the virtual adapter 160. The controller 141 receives the notice and detects the failure in the virtual adapter 160.

(Step S12) The controller 141 refers to the connection configuration management table 131 stored in the management information storage section 130, and checks virtual adapter structure. To be concrete, the controller 141 checks the presence of other virtual adapters on the FC interface 106 to which the virtual adapter 160 in which the failure is detected belongs. The controller 141 specifies the virtual adapter 160a as another virtual adapter. The controller 141 refers to the connection configuration management table 131 and specifies the virtual machine 150a corresponding to the virtual adapter 160a.

(Step S13) The controller 141 inquires of the virtual machine 150a whether the virtual machine 150a has a save destination virtual adapter (hereinafter referred to as a "save destination adapter") on a second physical adapter. In response to the inquiry, the redundant path controller 153a of the virtual machine 150a returns a response indicative of the presence or absence of a save destination adapter. If there is a save destination adapter, then the redundant path controller 153a informs the controller 141 of identification information for the save destination adapter. The controller 141 sets in the redundant group management table 132 the identification information for the save destination adapter it accepts. For example, the redundant path controller 153a informs the controller 141 that there is a save destination adapter (virtual adapter 160c) on the FC interface 106a for the virtual adapter 160a. The controller 141 registers the correspondence between the virtual adapter 160a and the virtual adapter 160c in the redundant group management table 132. Similarly, the controller 141 also registers the correspondence between the virtual adapter 160 in which the failure occurs and the virtual adapter 160b in the redundant group management table 132 by acquiring information from the redundant path controller 153.

(Step S14) The controller 141 selects one virtual adapter for which a save destination adapter is not yet selected from among the other virtual adapters the presence of which the controller 141 checks in step S12. For example, the controller 141 selects the virtual adapter 160a.

(Step S15) The controller 141 refers to the redundant group management table 132 and determines whether or not there is a save destination adapter for the virtual adapter. If there is no save destination adapter for the virtual adapter, then the controller 141 proceeds to step S16. If there is a save destination adapter for the virtual adapter, then the controller 141 proceeds to step S19.

(Step S16) The controller 141 performs a physical adapter addition process. For example, the controller 141 informs the manager of a message for prompting the manager to add the FC interface 106a. After the manager performs the work of newly mounting the FC interface 106a on the server apparatus 100, the controller 141 performs a process for making it possible to use the FC interface 106a on the virtual machine 150a. The controller 141 assigns the save destination virtual adapter 160c, of virtual adapters on the FC interface 106a, to the virtual machine 150a. The controller 141 registers in the connection configuration management table 131 a connection configuration regarding the added FC interface 106a. The controller 141 registers the correspondence between the save source virtual adapter and the save destination virtual adapter in the redundant group management table 132 stored in the management information storage section 130.

(Step S17) The controller 141 refers to the connection configuration management table 131 and determines whether or not a zone corresponding to the save destination adapter has already been set in the FC switch apparatus 200. If a zone corresponding to the save destination adapter has already been set in the FC switch apparatus 200, then the controller 141 proceeds to step S19. If a zone corresponding to the save destination adapter is not yet set in the FC switch apparatus 200, then the controller 141 proceeds to step S18.

(Step S18) The controller 141 adds port information corresponding to the save destination adapter to zone information for the FC switch apparatus 200.

(Step S19) The controller 141 gives the virtual machine 150a instructions by interprocess communication to incorporate a connection destination apparatus of the save destination adapter. When the virtual machine 150a receives the instructions, the virtual machine 150a communicates with the connection destination apparatus and performs a process for making it possible to use the connection destination apparatus via the save destination adapter. When the virtual machine 150a completes the incorporation of the connection destination apparatus, the virtual machine 150a informs the hypervisor 140 that it completes the incorporation of the connection destination apparatus.

(Step S20) The controller 141 gives the virtual machine 150a instructions to switch communication to the save destination adapter. The redundant path controller 153a switches an adapter to be used for communication from the virtual adapter 160a to the virtual adapter 160c. The redundant path controller 153a gives the controller 141 notice that it completes the switching. The controller 141 receives the notice and updates operation states of the virtual adapters 160a and 160c in the redundant group management table 132.

(Step S21) The controller 141 refers to the redundant group management table 132 and determines whether or not save is completed for all the virtual adapters specified in step S12. If save is completed for all the virtual adapters specified in step S12, then the controller 141 proceeds to step S22. If there is a virtual adapter for which save is not yet performed, then the controller 141 proceeds to step S14.

(Step S22) The controller 141 considers that the physical adapter (FC interface 106) in which the failure occurs is in a failed state, and stops its operation. The controller 141 prevents the virtual machine 150 or 150a, for example, from making a request to acquire a resource of the physical adapter, and shuts off the physical adapter in which the failure occurs. The controller 141 turns off the power to the physical adapter in which the failure occurs, and disconnects it from the server apparatus 100. The controller 141 controls virtual adapter switching in this way. In step S13, the controller 141 may refer to the connection configuration management table 131 stored in the management information storage section 130 to check the presence or absence of a save destination adapter.

Step S22 is performed after switching from the virtual adapter 160 in which the virtual machine 150 detects the failure to the virtual adapter 160b is completed. After the failure is detected, switching from the virtual adapter 160 in which the failure is detected to the virtual adapter 160b is performed by the redundant path controller 153. The redundant path controller 153 informs the controller 141 that switching from the virtual adapter 160 to the virtual adapter 160b is completed. The controller 141 also manages the condition of switching between the virtual adapters 160 and 160b in this way.

For example, if adapter switching is not performed by the redundant path controller 153 after the elapse of a determined period from the detection of the failure, then the controller 141 may give the redundant path controller 153 instructions to perform adapter switching.

Furthermore, the virtual machine 150 which detects the failure may not have a save destination adapter. In that case, the controller 141 may reserve adapter switching by the redundant path controller 153 until the FC interface 106a is newly mounted on the server apparatus 100.

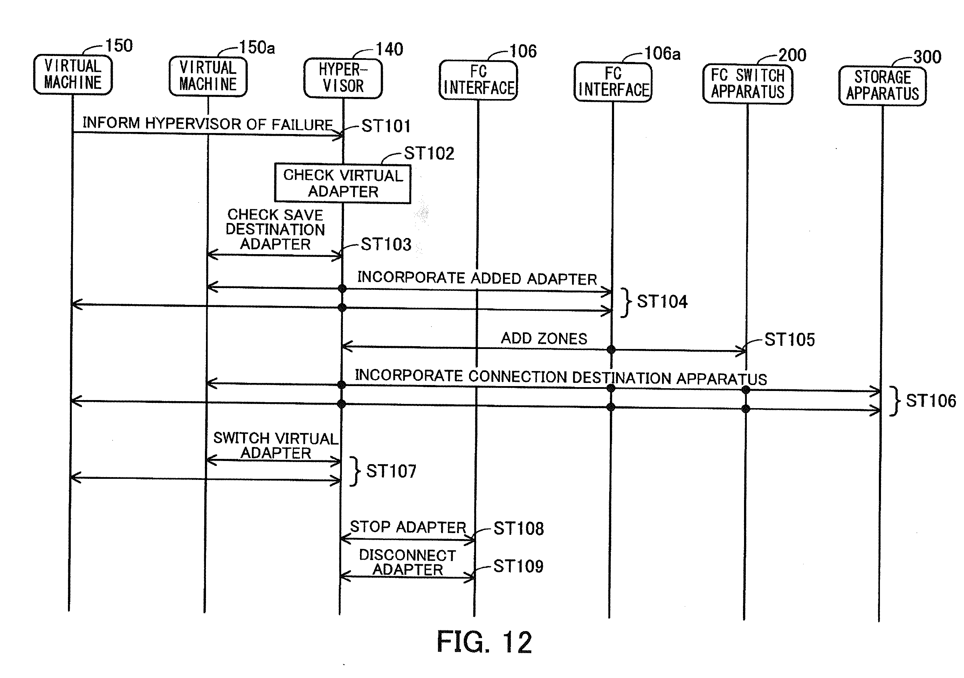

FIG. 12 is a sequence diagram of an entire process at failure detection time in the second embodiment. A process indicated in FIG. 12 will now be described in order of step number. It is assumed that the virtual machines 150 and 150a are accessing the storage apparatus 300 via the virtual adapters 160 and 160a, respectively, just before the following step ST101. In addition, it is assumed that the FC interface 106a is not yet mounted on the server apparatus 100.

(Step ST101) The virtual machine 150 informs the hypervisor 140 of a failure in the virtual adapter 160.

(Step ST102) The hypervisor 140 refers to the connection configuration management table 131 stored in the management information storage section 130, and checks the virtual adapter 160a which shares the FC interface 106 with the virtual adapter 160. In addition, the hypervisor 140 checks that the virtual machine 150a is associated with the virtual adapter 160a.

(Step ST103) The hypervisor 140 inquires of the virtual machine 150a whether there is a save destination adapter. The virtual machine 150a returns to the hypervisor 140 a response to the effect that there is no save destination adapter. After that, the hypervisor 140 gives the manager instructions to newly mount the FC interface 106a on the server apparatus 100. In accordance with the instructions, the manager mounts the FC interface 106a on the server apparatus 100. In this case, there is no save destination adapter for the virtual machine 150 either. Accordingly, until the added FC interface 106a becomes usable after the detection of the failure, the hypervisor 140 makes the redundant path controller 153 reserve virtual adapter switching.

(Step ST104) The hypervisor 140 gives the virtual machines 150 and 150a instructions to incorporate driver modules for the virtual adapters 160b and 160c, respectively, on the FC interface 106a. In accordance with the instructions, the virtual machines 150 and 150a incorporate the virtual adapters 160b and 160c respectively. As a result, the virtual machines 150 and 150a can use the virtual adapters 160b and 160c respectively. The hypervisor 140 registers the virtual adapters 160 and 160b as a pair in a redundant group in the redundant group management table 132 stored in the management information storage section 130. Similarly, the hypervisor 140 registers the virtual adapters 160a and 160c as a pair in a redundant group in the redundant group management table 132.

(Step ST105) The hypervisor 140 adds port information corresponding to the virtual adapters 160b and 160c (information regarding the physical adapter and information regarding a virtual port number of the physical adapter) to zone information for the FC switch apparatus 200. This enables communication from the virtual adapters 160b and 160c via zones of the FC switch apparatus 200.

(Step ST106) The hypervisor 140 gives the virtual machines 150 and 150a instructions to incorporate the storage apparatus 300 via the virtual adapters 160b and 160c respectively. In accordance with the instructions, the virtual machines 150 and 150a communicate with the storage apparatus 300 and bring about a state in which the storage apparatus 300 can be used via the virtual adapters 160b and 160c respectively. As a result, the virtual machine 150 can access the storage apparatus 300 via the virtual adapter 160b and the virtual machine 150a can access the storage apparatus 300 via the virtual adapter 160c.

(Step ST107) The hypervisor 140 gives the virtual machines 150 and 150a instructions to perform virtual adapter switching. In accordance with the instructions, the virtual machine 150 performs switching from the virtual adapter 160 to the virtual adapter 160b and the virtual machine 150a performs switching from the virtual adapter 160a to the virtual adapter 160c.

(Step ST108) The hypervisor 140 checks that all the virtual machines which share the FC interface 106 have already been transferred to the second FC interface and that communication is stopped for all the virtual adapters on the FC interface 106. The hypervisor 140 shuts off the FC interface 106, turns off the power to the FC interface 106, and stops the FC interface 106.

(Step ST109) The hypervisor 140 disconnects the FC interface 106 from the server apparatus 100. The FC interface 106 is in a state in which it can be removed from the server apparatus 100.

As has been described, when the hypervisor 140 detects the failure in the virtual adapter 160, the hypervisor 140 also transfers to the FC interface 106a the virtual machine 150a which shares the FC interface 106 with the virtual machine 150. As a result, all the virtual machines which use the FC interface 106 are saved on the FC interface 106a.

The physical adapter addition process performed in step S16 of FIG. 11 will now be described. In the following description it is assumed that the FC interface 106a is added.

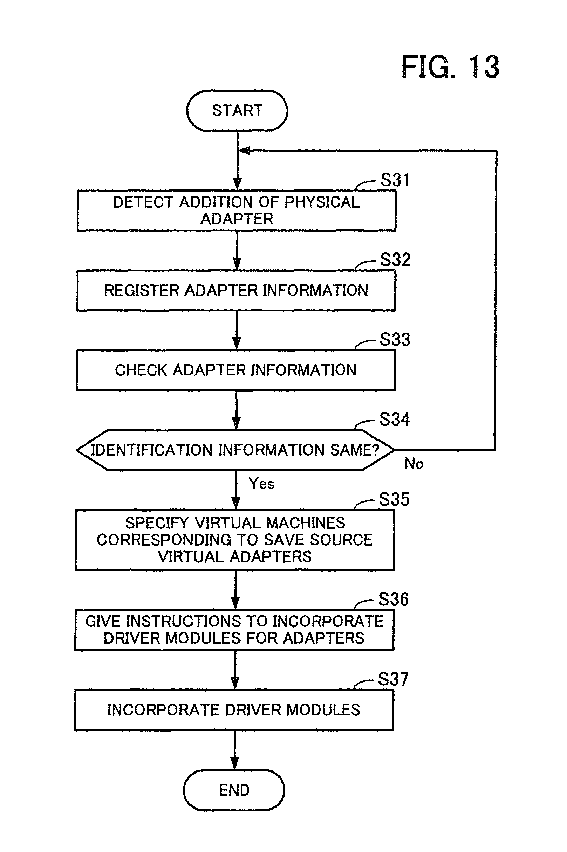

FIG. 13 is a flow chart of the physical adapter addition process in the second embodiment. The process indicated in FIG. 13 will now be described in order of step number.

(Step S31) The manager mounts the FC interface 106a on the server apparatus 100. In addition, the manager connects the FC interface 106a and the FC switch apparatus 200 by an FC cable. The controller 141 detects that the FC interface 106a is added to the server apparatus 100.

(Step S32) The controller 141 registers information regarding the FC interface 106a and the virtual adapters 160b and 160c in the connection configuration management table 131 stored in the management information storage section 130. The controller 141 acquires information, that is to say, a connection destination WWN and a zone regarding each save source virtual adapter from the connection configuration management table 131 and registers them in the connection configuration management table 131 as information, that is to say, a connection destination WWN and a zone for a save destination adapter. The controller 141 may register information inputted by the manager by the use of the management terminal apparatus 400 in the connection configuration management table 131 as information, such as a connection destination WWN and a zone, for a save destination adapter. In addition, the controller 141 registers the virtual adapters 160b and 160c as save destinations for the virtual adapters 160 and 160a, respectively, in the redundant group management table 132 stored in the management information storage section 130. Virtual adapters paired may be designated by the manager by the use of the management terminal apparatus 400 or be automatically designated by the controller 141 on the basis of a condition such as ascending order of DID.

(Step S33) The controller 141 refers to the connection configuration management table 131 and checks VIDs and DIDs of the FC interface 106a and the virtual adapters 160b and 160c newly registered.

(Step S34) The controller 141 determines whether or not virtual adapters in each redundant group have the same VIDs and the same DIDs. If virtual adapters in each redundant group have the same VIDs and the same DIDs, then the controller 141 proceeds to step S35. If virtual adapters in each redundant group have different VIDs or different DIDs, then the controller 141 gives the manager instructions to mount a physical adapter having the same function, and step S31 is performed.

(Step S35) The controller 141 refers to the connection configuration management table 131 and specifies the virtual machines 150 and 150a corresponding to the save source virtual adapters 160 and 160a respectively.

(Step S36) The controller 141 gives the adapter drivers 152 and 152a, the redundant path controllers 153 and 153a, and the connection destination apparatus drivers 154 and 154a instructions to incorporate driver modules of the virtual adapters 160b and 160c respectively.

(Step S37) In accordance with the instructions from the controller 141, the adapter drivers 152 and 152a, the redundant path controllers 153 and 153a, and the connection destination apparatus drivers 154 and 154a incorporate the driver modules of the virtual adapters 160b and 160c respectively.

The process for making it possible to use the FC interface 106a newly added is performed in this way. The controller 141 checks that virtual adapters in each redundant group have the same VIDs and the same DIDs. If virtual adapters in each redundant group have different VIDs or different DIDs, then the controller 141 prompts the manager to replace the physical adapter. This guarantees no change in adapter function before and after the save.

As a result, the possibility of deterioration in communication performance, discrepancy in performance between the server apparatus 100 and the connection destination apparatus, or the like is decreased.

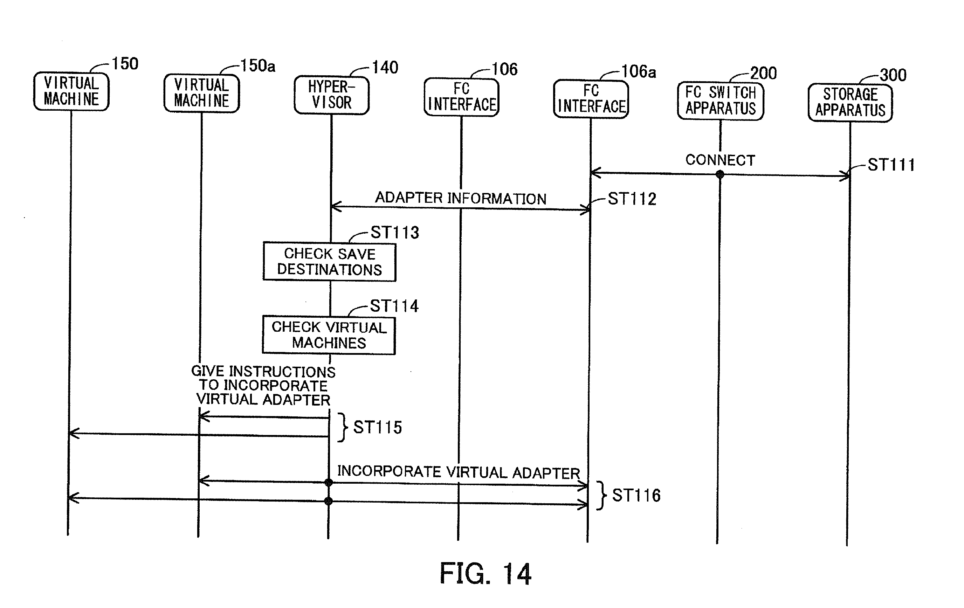

FIG. 14 is a sequence diagram of the physical adapter addition process in the second embodiment. The process indicated in FIG. 14 will now be described in order of step number.

(Step ST111) The manager mounts the FC interface 106a on the server apparatus 100. The manager connects the FC interface 106a and the FC switch apparatus 200 by an FC cable.

(Step ST112) When the hypervisor 140 detects that the FC interface 106a is added, the hypervisor 140 acquires from the FC interface 106a information regarding the physical adapter and the virtual adapters. The hypervisor 140 registers the acquired information in the connection configuration management table 131 stored in the management information storage section 130. In addition, the hypervisor 140 registers the virtual adapters 160b and 160c as save destinations for the virtual adapters 160 and 160a, respectively, in the redundant group management table 132 stored in the management information storage section 130.

(Step ST113) The hypervisor 140 refers to the connection configuration management table 131 and checks VIDs and DIDs of the FC interface 106a and the virtual adapters 160b and 160c newly registered. The hypervisor 140 checks that virtual adapters in each redundant group have the same VIDs and the same DIDs. To be concrete, the hypervisor 140 checks that the virtual adapters 160 and 160b have the same VIDs and the same DIDs. In addition, the hypervisor 140 checks that the virtual adapters 160a and 160c have the same VIDs and the same DIDs.

(Step ST114) The hypervisor 140 refers to the connection configuration management table 131 and specifies the virtual machine 150 associated with the virtual adapter 160. Similarly, the hypervisor 140 specifies the virtual machine 150a associated with the virtual adapter 160a.

(Step ST115) The hypervisor 140 gives the virtual machines 150 and 150a instructions to incorporate the virtual adapters 160b and 160c respectively.

(Step ST116) The virtual machines 150 and 150a incorporate driver modules of the virtual adapters 160b and 160c respectively. As a result, the virtual machine 150 can use the virtual adapter 160b and the virtual machine 150a can use the virtual adapter 160c.

As has been described, after the FC interface 106a is added, the hypervisor 140 makes the virtual machines 150 and 150a incorporate the virtual adapters 160b and 160c respectively. The hypervisor 140 manages a state in which the virtual adapters 160b and 160c are assigned to the virtual machines 150 and 150a, respectively, by the connection configuration management table 131. Furthermore, the hypervisor 140 manages the correspondence between the virtual adapter 160, 160a, 160b, or 160c and a redundant group by the redundant group management table 132.

The connection destination apparatus addition process performed in step S19 of FIG. 11 will now be described.

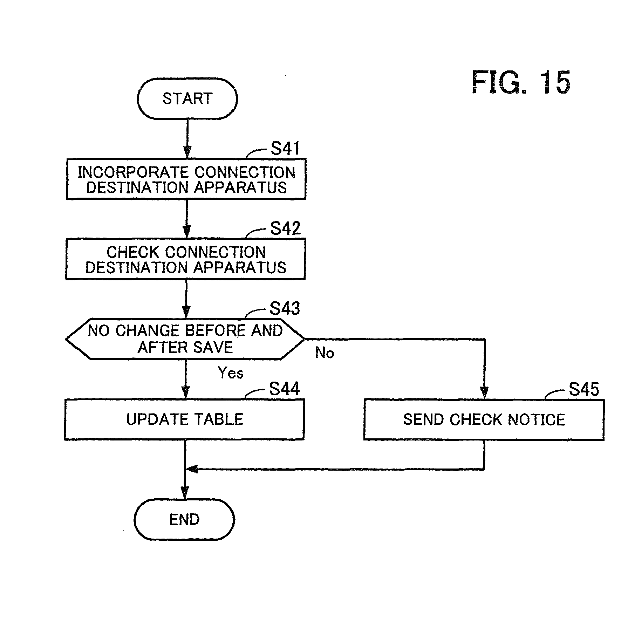

FIG. 15 is a flow chart of the connection destination apparatus addition process in the second embodiment. The process indicated in FIG. 15 will now be described in order of step number.

(Step S41) The controller 141 gives the virtual machines 150 and 150a instructions to incorporate a connection destination apparatus (storage apparatus 300). At this time the controller 141 refers to in the connection configuration management table 131 stored in the management information storage section 130, and informs the virtual machine 150 of a connection destination WWN for the virtual adapter 160b. Similarly, the controller 141 informs the virtual machine 150a of a connection destination WWN for the virtual adapter 160c.

(Step S42) The redundant path controller 153 checks a connection destination WWN for the virtual adapter 160. The redundant path controller 153a checks a connection destination WWN for the virtual adapter 160a.

(Step S43) Each of the redundant path controllers 153 and 153a determines whether or not the connection destination WWN which it accepts in step S41 and the connection destination WWN which it checks in step S42 are the same. If they are the same, that is to say, if each of the redundant path controllers 153 and 153a checks that access to the original connection destination apparatus can also be performed after a change of FC interface, then it incorporates the connection destination apparatus. After that, each of the redundant path controllers 153 and 153a informs the hypervisor 140 that the incorporation of the connection destination apparatus is completed, and step S44 is performed. If they are different, that is to say, if access to the original connection destination apparatus may not be performed after a change of FC interface, then each of the redundant path controllers 153 and 153a informs the hypervisor 140 of this and step S45 is performed.

(Step S44) The controller 141 updates the redundant group management table 132 stored in the management information storage section 130. To be concrete, the controller 141 changes an operation state of each of the virtual adapters 160b and 160c to "standby".

(Step S45) The controller 141 prompts the manager to check connection destination apparatus for the virtual adapters 160b and 160c. For example, the controller 141 displays a determined message on the management terminal apparatus 400 or transmits to an electronic mail address of the manager an electronic mail in which a determined message is described.

The controller 141 makes it possible in this way to use the storage apparatus 300 on the virtual machines 150 and 150a via the save destination virtual adapters. The controller 141 checks in advance that there is no change in connection destination apparatus before and after save. This reduces an influence on processes performed by the virtual machines 150 and 150a after the save.

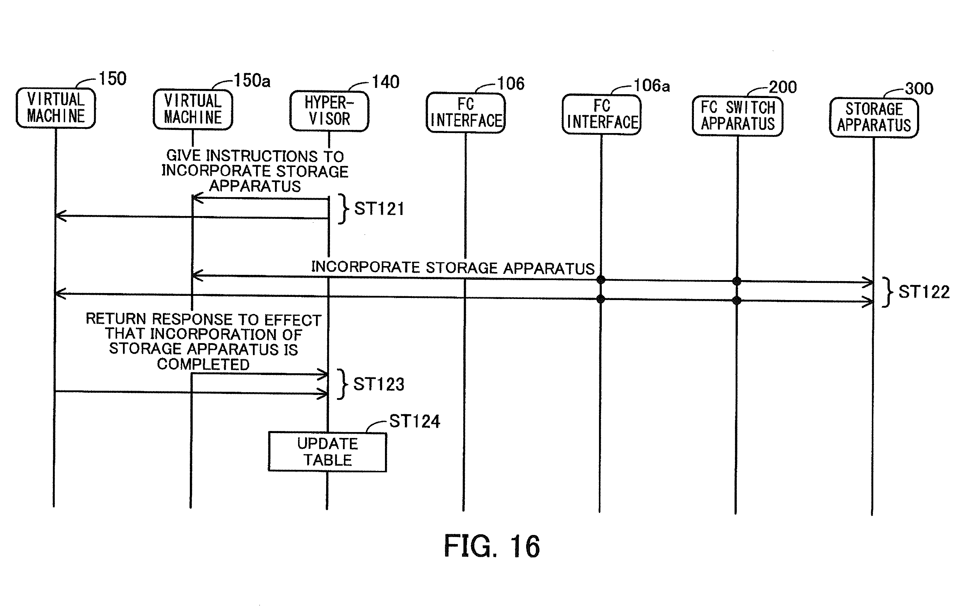

FIG. 16 is a sequence diagram of the connection destination apparatus addition process in the second embodiment. The process indicated in FIG. 16 will now be described in order of step number.

(Step ST121) The hypervisor 140 gives the virtual machines 150 and 150a instructions to incorporate a storage apparatus 300.

(Step ST122) Each of the virtual machines 150 and 150a checks that the storage apparatus 300 which is a new connection destination and the storage apparatus 300 which is a current connection destination are the same. Each of the virtual machines 150 and 150a then incorporates the storage apparatus 300. As a result, the virtual machine 150 can access the storage apparatus 300 via the virtual adapter 160b and the virtual machine 150a can access the storage apparatus 300 via the virtual adapter 160c.

(Step ST123) Each of the virtual machines 150 and 150a returns to the hypervisor 140 a response to the effect that the incorporation of the storage apparatus 300 is completed.

(Step ST124) The hypervisor 140 updates the redundant group management table 132 stored in the management information storage section 130. To be concrete, the controller 141 changes an operation state of each of the virtual adapters 160b and 160c to "standby".

As a result, adapter switching has been arranged in each redundant group.

The adapter switching process performed in step S20 of FIG. 11 will now be described.

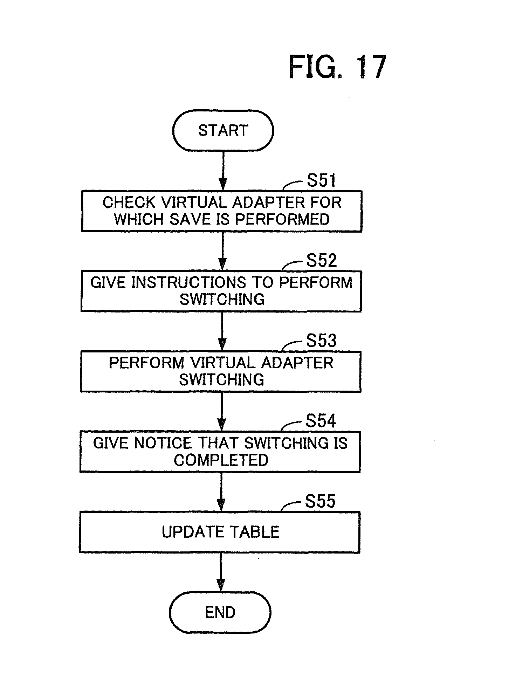

FIG. 17 is a flow chart of the adapter switching process in the second embodiment. The process indicated in FIG. 17 will now be described in order of step number.

(Step S51) The controller 141 checks a virtual adapter for which save is performed. To be concrete, the controller 141 checks the virtual adapter 160a on the FC interface 106 in which a failure is detected. The controller 141 refers to the redundant group management table 132 stored in the management information storage section 130, and specifies the virtual adapter 160c as a save destination adapter for the virtual adapter 160a.

(Step S52) The controller 141 gives the virtual machine 150a instructions to perform switching to the virtual adapter 160c.

(Step S53) When the redundant path controller 153a accepts the instructions from the controller 141, the redundant path controller 153a refers to the redundant group management table 132 and checks an IO request state of the virtual machine 150a. The redundant path controller 153a may refer to an IO request state of the connection destination apparatus driver 154a to check an IO request state of the virtual machine 150a. When an IO request state of the virtual machine 150a by the virtual adapter 160a becomes "stopped", the redundant path controller 153a performs switching from the virtual adapter 160a to the virtual adapter 160c.

(Step S54) The redundant path controller 153a gives the controller 141 notice that the switching is completed.

(Step S55) When the controller 141 accepts from the redundant path controller 153a the notice that the switching is completed, the controller 141 updates the redundant group management table 132. To be concrete, the controller 141 checks that an IO request state is "stopped" for the virtual adapter 160a, changes an operation state to "standby" for the virtual adapter 160a, and changes an operation state to "operated" for the virtual adapter 160c.

The controller 141 controls adapter switching in a redundant group in this way. If a failure occurs in the virtual adapter 160, then the controller 141 checks the presence of the virtual machine 150a which shares the FC interface 106 with the virtual machine 150. The controller 141 gives the redundant path controller 153a of the virtual machine 150a instructions to perform virtual adapter switching.

The redundant path controller 153a performs switching from the virtual adapter 160a on the FC interface 106 to the virtual adapter 160c on the FC interface 106a at timing at which the virtual machine 150a is not accessing the storage apparatus 300. As a result, adapter switching does not interrupt a process performed by the virtual machine 150a.

If adapter switching by the virtual machine 150 is reserved (see, for example, step ST103 of FIG. 12), then the controller 141 specifies the virtual adapter 160b as a save destination adapter for the virtual machine 150 in the above step S51. In the later steps S52 through S55, the controller 141 controls switching from the virtual adapter 160 to the virtual adapter 160b performed by the redundant path controller 153 of the virtual machine 150. This is the same with the virtual machine 150a.

By doing so, all the virtual machines that share the FC interface 106 in which the failure is detected are transferred to the second FC interface 106a. As a result, communication performed via all the virtual adapters on the FC interface 106 is stopped. Accordingly, even if maintenance work, such as the replacement of the FC interface 106, is performed, influence on another virtual machine which operates on the server apparatus 100 can be curbed. This makes maintenance work easy.

Furthermore, the controller 141 transfers another virtual machine to the FC interface 106a at timing at which the failure is detected in the FC interface 106. As a result, maintenance work on the server apparatus 100 is begun promptly and is performed efficiently.

In the above description the virtual machines 150 and 150a are transferred to the same FC interface 106a. However, the virtual machines 150 and 150a may be transferred to different FC interfaces. Furthermore, in the above description a connection destination apparatus for the virtual machines 150 and 150a is the storage apparatus 300. However, the virtual machines 150 and 150a may be connected to different connection destination apparatus.

### (Third Embodiment)

A third embodiment will now be described. The differences between the above second embodiment and a third embodiment will mainly be described and descriptions of the same matters will be omitted.

In the example of the second embodiment, the virtual machines 150 and 150a include the redundant path controllers 153 and 153a, respectively, and each of the redundant path controllers 153 and 153a performs a virtual adapter switching process in accordance with instructions from the controller 141.

On the other hand, a hypervisor may have the functions of the redundant path controllers 153 and 153a. In a third embodiment this case will be taken as an example.

The entire structure of an information processing system according to a third embodiment is the same as the entire structure of the information processing system according to the second embodiment described in FIG. 2, so its description will be omitted. Furthermore, examples of hardware of a server apparatus, an FC switch apparatus, and a storage apparatus in the third embodiment are the same as those of hardware of the server apparatus, the FC switch apparatus, and the storage apparatus described in FIGS. 3 through 5 respectively, so their descriptions will be omitted. In the third embodiment hardware of a server apparatus 100a, an FC switch apparatus, and a storage apparatus described below are indicated by the same numerals that are used in the second embodiment. Furthermore, a corresponding structure is indicated by the same numeral.

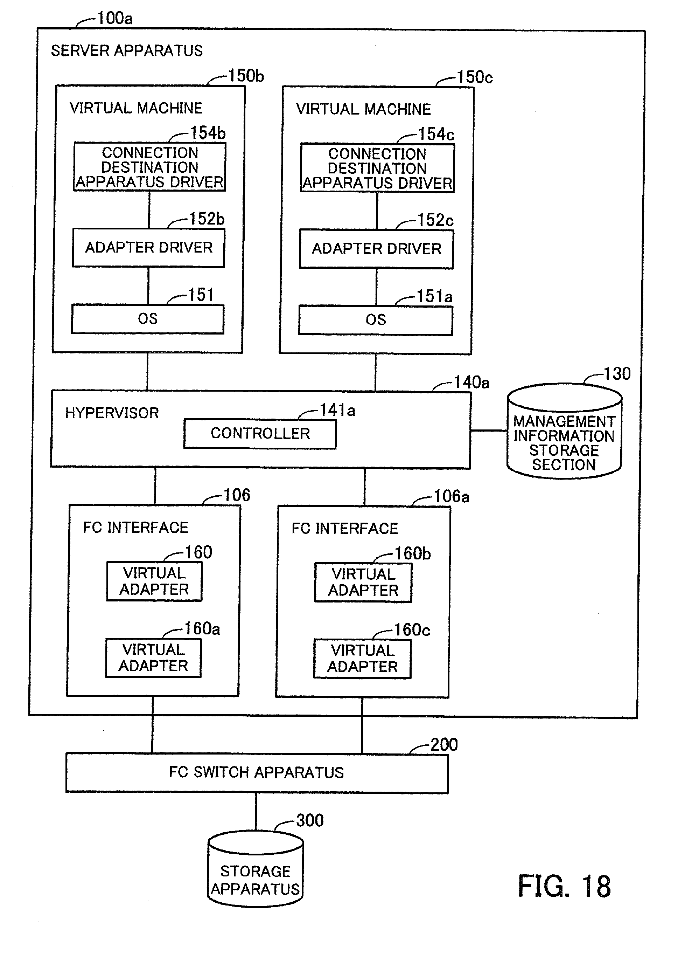

FIG. 18 is a block diagram of functions of the server apparatus in the third embodiment. The server apparatus 100a includes a management information storage section 130, a hypervisor 140a, virtual machines 150b and 150c, and virtual adapters 160, 160a, 160b, and 160c. A CPU 111 executes determined programs. By doing so, the functions of the management information storage section 130, the hypervisor 140a, and the virtual machines 150b and 150c are realized on the server apparatus 100a. However, all or a part of these components may be realized by dedicated hardware.

The management information storage section 130 corresponds to the management information storage section 130 in the second embodiment.

The hypervisor 140a corresponds to the hypervisor 140 in the second embodiment. The hypervisor 140a includes a controller 141a. The controller 141a corresponds to the controller 141 in the second embodiment. However, the controller 141a carries out the functions of the redundant path controllers 153 and 153a in the second embodiment in addition to the functions of the controller 141. The controller 141a exercises redundant control over virtual adapters assigned to the virtual machines 150b and 150c.

The virtual machine 150b includes an OS 151, an adapter driver 152b, and a connection destination apparatus driver 154b. The virtual machine 150c includes an OS 151a, an adapter driver 152c, and a connection destination apparatus driver 154c. The OSes 151b and 151c, the adapter drivers 152b and 152c, and the connection destination apparatus drivers 154b and 154c correspond to the OSes 151 and 151a, the adapter drivers 152 and 152a, and the connection destination apparatus drivers 154 and 154a, respectively, in the second embodiment.

The virtual adapters 160, 160a, 160b, and 160c correspond to the virtual adapters 160, 160a, 160b, and 160c, respectively, in the second embodiment.

By adopting the above structure, the same processes that are performed in the second embodiment can be realized. In that case, the processes performed on the redundant path controllers 153 and 153a in the second embodiment are performed on the controller 141a. In addition, the processes performed by the redundant path controllers 153 and 153a in the second embodiment are performed by the controller 141a.

In step ST101 in the sequence diagram of the entire process at failure detection time in the second embodiment indicated in FIG. 12, for example, the controller 141a determines the presence or absence of a failure in a virtual adapter by notice from the adapter driver 152b or 152c. Furthermore, the controller 141a communicates with the adapter driver 152b or 152c and monitors an IO request state of the virtual machine 150b or 150c. The controller 141a may communicate with the connection destination apparatus driver 154b or 154c to monitor an IO request state of the virtual machine 150b or 150c. By doing so, the controller 141a can determine an IO request state for a virtual adapter and determine a state in which adapter switching is completed. To be concrete, the controller 141a exercises control so that while the virtual machine 150c is accessing a storage apparatus 300 via the virtual adapter 160a, the virtual adapter 160a will not be put into a standby state.

Furthermore, in step ST103 of FIG. 12, for example, the controller 141a makes a check by referring to a connection configuration management table 131 stored in the management information storage section 130. This reduces a processing load caused by inquiring of a virtual machine. In addition, the controller 141a performs virtual adapter switching in step ST107.

As a result, the same effects that are obtained in the second embodiment are achieved. In particular, the controller 141a performs a switching process in block. This saves communication, such as an inquiry about whether there is a save destination adapter and instructions to perform switching, which is performed for each virtual machine. Accordingly, a switching process can be performed at high speed.

### (Fourth Embodiment)

A fourth embodiment will now be described. The differences between the above second and third embodiments and a fourth embodiment will mainly be described and descriptions of the same matters will be omitted.

In the second and third embodiments the hypervisor includes the function of the controller for managing the connection configurations of the physical adapters and the virtual adapters. On the other hand, the controller may be included in another apparatus. In an example of a fourth embodiment, a management terminal apparatus 400 includes a controller.

The entire structure of an information processing system according to a fourth embodiment is the same as the entire structure of the information processing system according to the second embodiment described in FIG. 2, so its description will be omitted. Furthermore, examples of hardware of a server apparatus, an FC switch apparatus, and a storage apparatus in the fourth embodiment are the same as those of hardware of the server apparatus, the FC switch apparatus, and the storage apparatus described in FIGS. 3 through 5 respectively, so their descriptions will be omitted. In the fourth embodiment the server apparatus, the FC switch apparatus, the storage apparatus, and a management terminal apparatus are indicated by the same numerals that are used in the second embodiment.

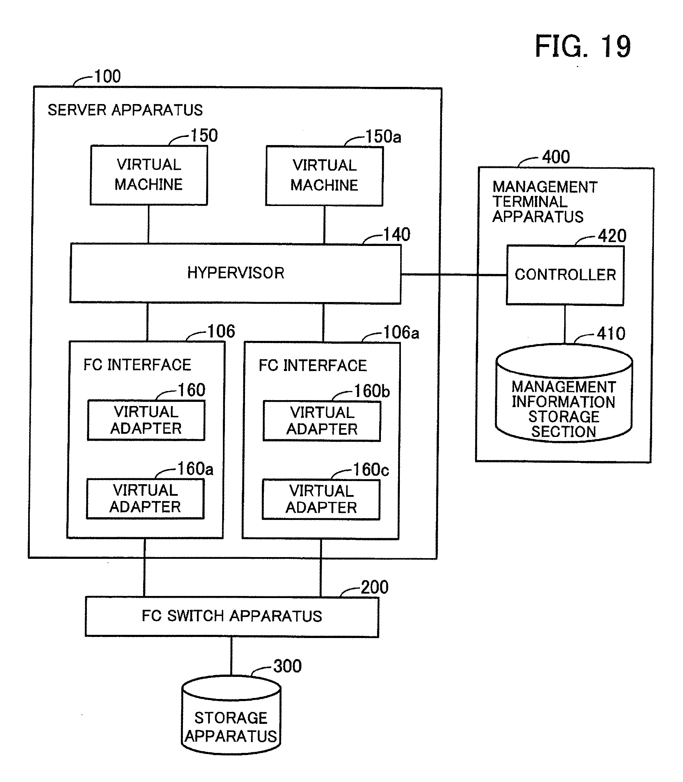

FIG. 19 is a block diagram of functions of a management terminal apparatus in the fourth embodiment. A management terminal apparatus 400 includes a management information storage section 410 and a controller 420. A CPU included in the management terminal apparatus 400 executes determined programs stored in a memory included in the management terminal apparatus 400. By doing so, these functions are realized on the management terminal apparatus 400. However, the controller 420 may be realized by dedicated hardware.

The management information storage section 410 corresponds to the management information storage section 130 in the second embodiment. The management information storage section 410 stores management information. The management information includes a connection configuration management table and a redundant group management table described in FIGS. 9 and 10 respectively.

The controller 420 corresponds to the controller 141 in the second embodiment. That is to say, the controller 420 carries out the functions of the controller 141 in the second embodiment. To be concrete, when the controller 420 receives from a hypervisor 140 notice to the effect that a failure has occurred in communication performed by a virtual machine via an FC interface, the controller 420 refers to the management information storage section 410 and specifies a second virtual machine that performs communication by the use of the FC interface. The controller 420 gives the hypervisor 140 instructions to assign the specified second virtual machine to another FC interface. In accordance with the instructions from the controller 420, the hypervisor 140 assigns the second virtual machine to another FC interface.

A process performed by the management terminal apparatus 400 having the above structure will now be described.

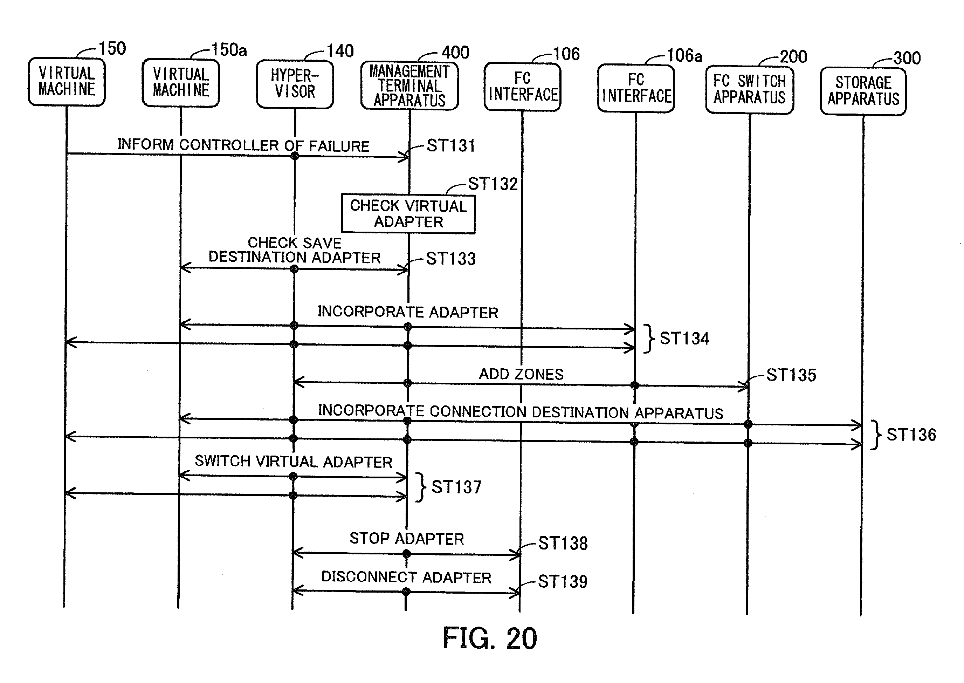

FIG. 20 is a sequence diagram of an entire process at failure detection time in the fourth embodiment. A process indicated in FIG. 20 will now be described in order of step number. It is assumed that virtual machines 150 and 150a are accessing a storage apparatus 300 via virtual adapters 160 and 160a, respectively, just before the following step ST131. In addition, it is assumed that an FC interface 106a is not yet mounted on a server apparatus 100.

(Step ST131) The virtual machine 150 informs the controller 420 via the hypervisor 140 of a failure in the virtual adapter 160. In the following description it is assumed that communication between the virtual machine 150 or 150a and the controller 420 is performed, as in step ST131, via the hypervisor 140.

(Step ST132) The controller 420 refers to the connection configuration management table stored in the management information storage section 410, and checks the virtual adapter 160a which shares an FC interface 106 with the virtual adapter 160. In addition, the controller 420 checks that the virtual machine 150a is associated with the virtual adapter 160a.

(Step ST133) The controller 420 inquires of the virtual machine 150a whether there is a save destination adapter. The virtual machine 150a returns to the controller 420 a response to the effect that there is no save destination adapter. After that, the controller 420 gives the manager instructions to newly mount the FC interface 106a on the server apparatus 100. In accordance with the instructions, the manager mounts the FC interface 106a on the server apparatus 100. In this case, there is no save destination adapter for the virtual machine 150 either. Accordingly, until the added FC interface 106a becomes usable after the detection of the failure, the controller 420 makes a redundant path controller 153 reserve virtual adapter switching.

(Step ST134) The controller 420 gives the virtual machines 150 and 150a instructions to incorporate driver modules for virtual adapters 160b and 160c, respectively, on the FC interface 106a. In accordance with the instructions, the virtual machines 150 and 150a incorporate the virtual adapters 160b and 160c respectively. As a result, the virtual machines 150 and 150a can use the virtual adapters 160b and 160c respectively. The controller 420 registers the virtual adapters 160 and 160b as a pair in a redundant group in the redundant group management table stored in the management information storage section 410. Similarly, the controller 420 registers the virtual adapters 160a and 160c as a pair in a redundant group in the redundant group management table.

(Step ST135) The controller 420 gives the hypervisor 140 instructions to add zone information for an FC switch apparatus 200. The hypervisor 140 adds port information corresponding to the virtual adapters 160b and 160c to zone information for the FC switch apparatus 200. This enables communication from the virtual adapters 160b and 160c via zones of the FC switch apparatus 200. The controller 420 may directly set zones on the FC switch apparatus 200. For example, by connecting the management terminal apparatus 400 and an SVP 203 of the FC switch apparatus 200, the controller 420 can directly send instructions to the FC switch apparatus 200.

(Step ST136) The controller 420 refers to the redundant group management table and checks that IO request states for the virtual adapters 160 and 160a have become "stopped". The controller 420 gives the virtual machines 150 and 150a instructions to incorporate the storage apparatus 300 via the virtual adapters 160b and 160c respectively. In accordance with the instructions, the virtual machines 150 and 150a communicate with the storage apparatus 300 and bring about a state in which the storage apparatus 300 can be used via the virtual adapters 160b and 160c respectively. As a result, the virtual machine 150 can access the storage apparatus 300 via the virtual adapter 160b and the virtual machine 150a can access the storage apparatus 300 via the virtual adapter 160c.

(Step ST137) The controller 420 gives the virtual machines 150 and 150a instructions to perform virtual adapter switching. In accordance with the instructions, the virtual machine 150 performs switching from the virtual adapter 160 to the virtual adapter 160b and the virtual machine 150a performs switching from the virtual adapter 160a to the virtual adapter 160c.

(Step ST138) The controller 420 checks that all the virtual machines which share the FC interface 106 have already been transferred to the second FC interface and that communication is stopped for all the virtual adapters on the FC interface 106. The controller 420 gives the hypervisor 140 instructions to stop the FC interface 106. The hypervisor 140 shuts off the FC interface 106, turns off the power to the FC interface 106, and stops the FC interface 106.

(Step ST139) The controller 420 gives the hypervisor 140 instructions to disconnect the FC interface 106. The hypervisor 140 disconnects the FC interface 106 from the server apparatus 100. The FC interface 106 is in a state in which it can be removed from the server apparatus 100.

If the virtual machine 150 detects the failure in the virtual adapter 160, the controller 420 controls in this way virtual adapter switching performed by the virtual machine 150a which shares the FC interface 106 with the virtual machine 150. In step ST137 the controller 420 gives instructions to perform virtual adapter switching. At this time the order in which the virtual adapters 160 and 160a are switched is the order in which IO request states for them become "stopped".

As a result, the same effects that are obtained in the second embodiment are achieved. Furthermore, by controlling adapter switching by the management terminal apparatus 400, integrated operation and management including apparatus (such as the FC switch apparatus 200 and the storage apparatus 300) other than the server apparatus 100 can be performed on the management terminal apparatus 400. That is to say, the manager can manage a connection configuration between a virtual machine and a connection destination apparatus, a state in which a redundant group is assigned, and the like by the use of the management terminal apparatus 400. As a result, the entire information processing system is operated and managed efficiently.

### (Fifth Embodiment)

A fifth embodiment will now be described. The differences between the above second through fourth embodiments and a fifth embodiment will mainly be described and descriptions of the same matters will be omitted.

In the example of the fourth embodiment, the management terminal apparatus 400 includes the controller 420. On the other hand, the FC switch apparatus 200 may include the functions of the controller 420. In an example of a fifth embodiment, an FC switch apparatus 200 includes a controller.

The entire structure of an information processing system according to a fifth embodiment is the same as the entire structure of the information processing system according to the second embodiment described in FIG. 2, so its description will be omitted. Furthermore, examples of hardware of a server apparatus, an FC switch apparatus, and a storage apparatus in the fifth embodiment are the same as those of hardware of the server apparatus, the FC switch apparatus, and the storage apparatus described in FIGS. 3 through 5 respectively, so their descriptions will be omitted. In the fifth embodiment the server apparatus, the FC switch apparatus, and the storage apparatus are indicated by the same numerals that are used in the second embodiment.

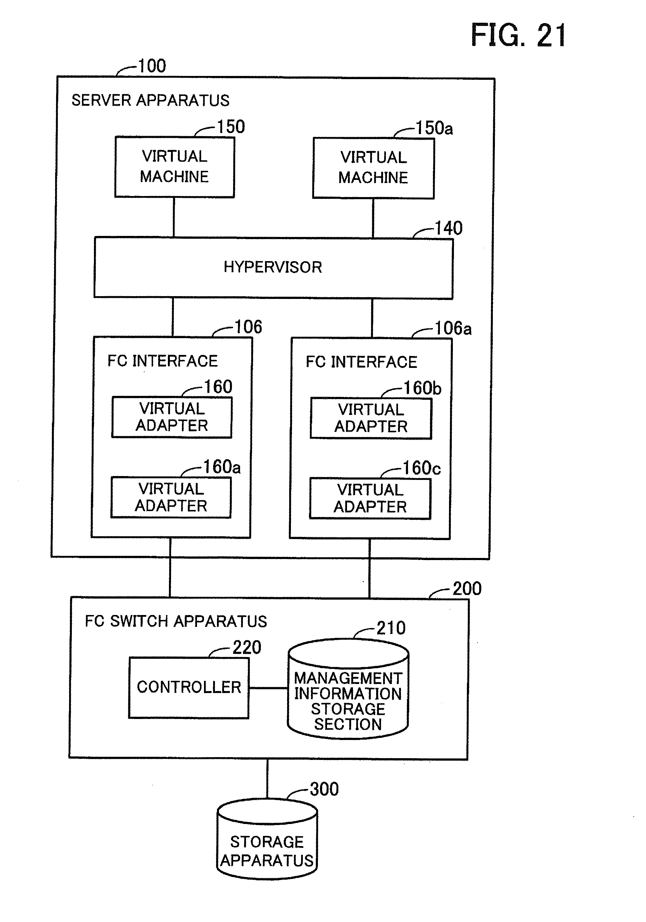

FIG. 21 is a block diagram of functions of the FC switch apparatus in the fifth embodiment. The FC switch apparatus 200 includes a management information storage section 210 and a controller 220. An SVP 203 executes determined programs stored in a memory included in the SVP 203 or a memory 202. By doing so, these functions are realized on the FC switch apparatus 200. However, the controller 220 may be realized by dedicated hardware.

The management information storage section 210 corresponds to the management information storage section 130 in the second embodiment. The management information storage section 210 stores management information. The management information includes a connection configuration management table and a redundant group management table described in FIGS. 9 and 10 respectively.

The controller 220 corresponds to the controller 141 in the second embodiment. That is to say, the controller 220 carries out the functions of the controller 141 in the second embodiment. To be concrete, when the controller 220 receives from a hypervisor 140 notice to the effect that a failure has occurred in communication performed by a virtual machine via an FC interface, the controller 220 refers to the management information storage section 210 and specifies a second virtual machine that performs communication by the use of the FC interface. The controller 220 gives the hypervisor 140 instructions to assign the specified second virtual machine to another FC interface. In accordance with the instructions from the controller 220, the hypervisor 140 assigns the second virtual machine to another FC interface.

A process performed by the FC switch apparatus 200 having the above structure will now be described.

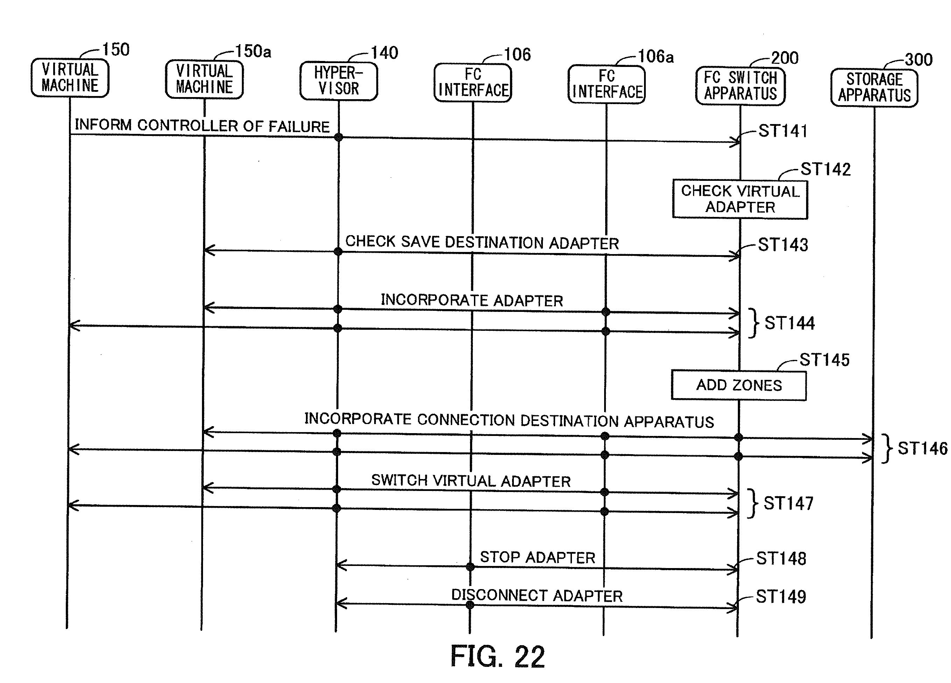

FIG. 22 is a sequence diagram of an entire process at failure detection time in the fifth embodiment. A process indicated in FIG. 22 will now be described in order of step number. It is assumed that virtual machines 150 and 150a are accessing a storage apparatus 300 via virtual adapters 160 and 160a, respectively, just before the following step ST141. In addition, it is assumed that an FC interface 106a is not yet mounted on a server apparatus 100.

(Step ST141) The virtual machine 150 informs the controller 220 via the hypervisor 140 of a failure in the virtual adapter 160. In the following description it is assumed that communication between the virtual machine 150 or 150a and the controller 220 is performed, as in step ST141, via the hypervisor 140.

(Step ST142) The controller 220 refers to the connection configuration management table stored in the management information storage section 210, and checks the virtual adapter 160a which shares an FC interface 106 with the virtual adapter 160. In addition, the controller 220 checks that the virtual machine 150a is associated with the virtual adapter 160a.

(Step ST143) The controller 220 inquires of the virtual machine 150a whether there is a save destination adapter. The virtual machine 150a returns to the controller 220 a response to the effect that there is no save destination adapter. After that, the controller 220 gives the manager instructions to newly mount the FC interface 106a on the server apparatus 100. In accordance with the instructions, the manager mounts the FC interface 106a on the server apparatus 100. In this case, there is no save destination adapter for the virtual machine 150 either. Accordingly, until the added FC interface 106a becomes usable after the detection of the failure, the controller 220 makes a redundant path controller 153 reserve virtual adapter switching.

(Step ST144) The controller 220 gives the virtual machines 150 and 150a instructions to incorporate driver modules for virtual adapters 160b and 160c, respectively, on the FC interface 106a. In accordance with the instructions, the virtual machines 150 and 150a incorporate the virtual adapters 160b and 160c respectively. As a result, the virtual machines 150 and 150a can use the virtual adapters 160b and 160c respectively. The controller 220 registers the virtual adapters 160 and 160b as a pair in a redundant group in the redundant group management table stored in the management information storage section 210. Similarly, the controller 220 registers the virtual adapters 160a and 160c as a pair in a redundant group in the redundant group management table.

(Step ST145) The controller 220 adds port information corresponding to the virtual adapters 160b and 160c to zone information for the FC switch apparatus 200. This enables communication from the virtual adapters 160b and 160c via zones of the FC switch apparatus 200.

(Step ST146) The controller 220 gives the virtual machines 150 and 150a instructions to incorporate the storage apparatus 300 via the virtual adapters 160b and 160c respectively. In accordance with the instructions, the virtual machines 150 and 150a communicate with the storage apparatus 300 and bring about a state in which the storage apparatus 300 can be used via the virtual adapters 160b and 160c respectively. As a result, the virtual machine 150 can access the storage apparatus 300 via the virtual adapter 160b and the virtual machine 150a can access the storage apparatus 300 via the virtual adapter 160c.

(Step ST147) The controller 220 refers to the redundant group management table and checks that IO request states for the virtual adapters 160 and 160a have become "stopped". The controller 220 gives the virtual machines 150 and 150a instructions to perform virtual adapter switching. In accordance with the instructions, the virtual machine 150 performs switching from the virtual adapter 160 to the virtual adapter 160b and the virtual machine 150a performs switching from the virtual adapter 160a to the virtual adapter 160c.

(Step ST148) The controller 220 checks that all the virtual machines which share the FC interface 106 have already been transferred to the second FC interface and that communication is stopped for all the virtual adapters on the FC interface 106. The controller 220 gives the hypervisor 140 instructions to stop the FC interface 106. The hypervisor 140 shuts off the FC interface 106, turns off the power to the FC interface 106, and stops the FC interface 106.

(Step ST149) The controller 220 gives the hypervisor 140 instructions to disconnect the FC interface 106. The hypervisor 140 disconnects the FC interface 106 from the server apparatus 100. The FC interface 106 is in a state in which it can be removed from the server apparatus 100.

If the virtual machine 150 detects the failure in the virtual adapter 160, the controller 220 controls in this way virtual adapter switching performed by the virtual machine 150a which shares the FC interface 106 with the virtual machine 150. In step ST147 the controller 220 gives instructions to perform virtual adapter switching. At this time the order in which the virtual adapters 160 and 160a are switched is the order in which IO request states for them become "stopped".

As a result, the same effects that are obtained in the second embodiment are achieved. Furthermore, the FC switch apparatus 200 not only controls adapter switching but also sets zones. Accordingly, the FC switch apparatus 200 can flexibly accommodate a change in the structure of the server apparatus 100.

### (Sixth Embodiment)

A sixth embodiment will now be described. The differences between the above second through fifth embodiments and a sixth embodiment will mainly be described and descriptions of the same matters will be omitted.

In an example of a sixth embodiment, a storage apparatus 300 includes a controller.

The entire structure of an information processing system according to a sixth embodiment is the same as the entire structure of the information processing system according to the second embodiment described in FIG. 2, so its description will be omitted. Furthermore, examples of hardware of a server apparatus, an FC switch apparatus, and a storage apparatus in the sixth embodiment are the same as those of hardware of the server apparatus, the FC switch apparatus, and the storage apparatus described in FIGS. 3 through 5 respectively, so their descriptions will be omitted. In the sixth embodiment the server apparatus, the FC switch apparatus, and the storage apparatus are indicated by the same numerals that are used in the second embodiment. A server apparatus 100 and an SVP 304 of a storage apparatus 300 are connected by a dedicated management LAN.

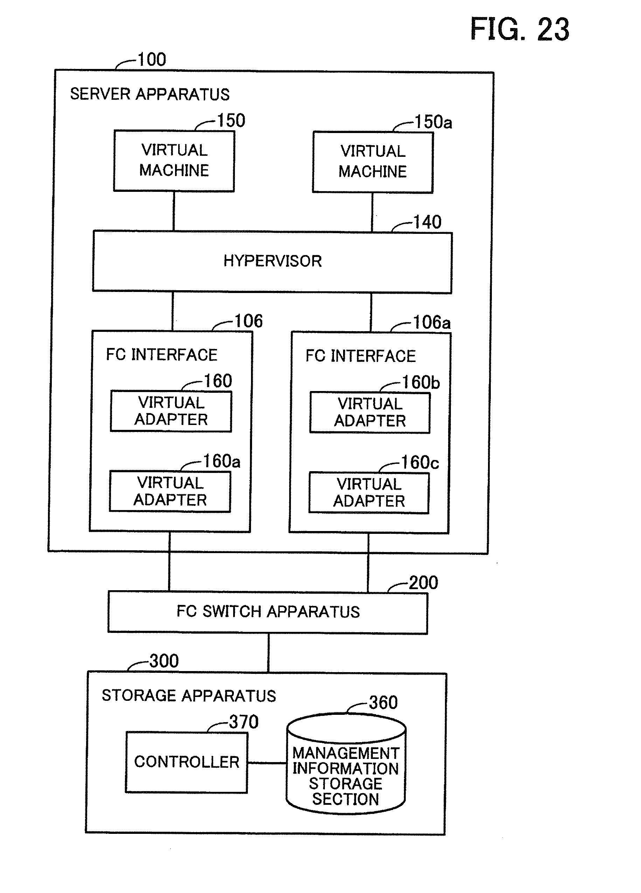

FIG. 23 is a block diagram of functions of the storage apparatus in the sixth embodiment. The storage apparatus 300 includes a management information storage section 360 and a controller 370. The SVP 304 executes determined programs stored in a memory included in the SVP 304. By doing so, these functions are realized on the storage apparatus 300. However, the controller 370 may be realized by dedicated hardware.

The management information storage section 360 corresponds to the management information storage section 130 in the second embodiment. The management information storage section 360 stores management information. The management information includes a connection configuration management table and a redundant group management table described in FIGS. 9 and 10 respectively.

The controller 370 corresponds to the controller 141 in the second embodiment. That is to say, the controller 370 carries out the functions of the controller 141 in the second embodiment. To be concrete, when a virtual machine detects an abnormality, such as a time-out, in access, the controller 370 detects that a failure has occurred in a virtual adapter corresponding to the virtual machine. At this time the controller 370 refers to the management information storage section 360 and specifies a second virtual machine which performs communication by the use of an FC interface corresponding to the virtual machine. The controller 370 gives a hypervisor 140 instructions to assign the specified second virtual machine to another FC interface. In accordance with the instructions from the controller 370, the hypervisor 140 assigns the second virtual machine to another FC interface.

A process performed by the storage apparatus 300 having the above structure will now be described.

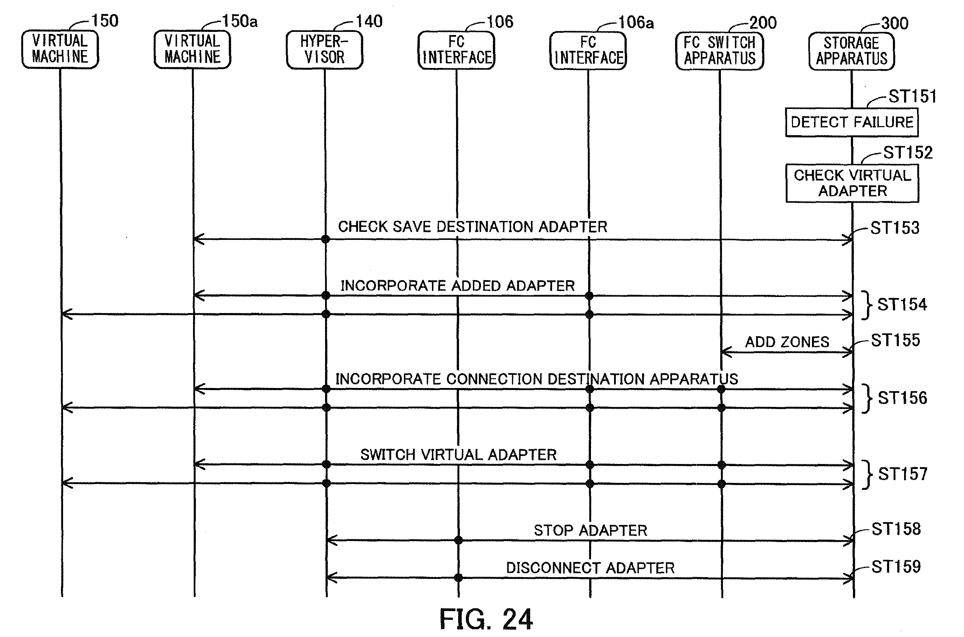

FIG. 24 is a sequence diagram of an entire process at failure detection time in the sixth embodiment. A process indicated in FIG. 24 will now be described in order of step number. It is assumed that virtual machines 150 and 150a are accessing the storage apparatus 300 via virtual adapters 160 and 160a, respectively, just before the following step ST151. In addition, it is assumed that an FC interface 106a is not yet mounted on the server apparatus 100.

(Step ST151) The controller 370 detects an abnormality, such as a time-out, in access from the virtual machine 150. The controller 370 refers to the connection configuration management table stored in the management information storage section 360, and specifies the virtual adapter 160 corresponding to the virtual machine 150. The controller 370 detects a failure in the virtual adapter 160.

(Step ST152) The controller 370 refers to the connection configuration management table and checks the virtual adapter 160a which shares an FC interface 106 with the virtual adapter 160. In addition, the controller 370 checks that the virtual machine 150a is associated with the virtual adapter 160a.

(Step ST153) The controller 370 inquires of the virtual machine 150a via the hypervisor 140 whether there is a save destination adapter. The virtual machine 150a returns to the controller 370 a response to the effect that there is no save destination adapter. After that, the controller 370 gives the manager instructions to newly mount the FC interface 106a on the server apparatus 100. In accordance with the instructions, the manager mounts the FC interface 106a on the server apparatus 100. In this case, there is no save destination adapter for the virtual machine 150 either. Accordingly, until the added FC interface 106a becomes usable after the detection of the failure, the controller 370 makes a redundant path controller 153 reserve virtual adapter switching. In the following description it is assumed that communication between the virtual machine 150 or 150a and the controller 370 is performed, as in step ST153, via the hypervisor 140.

(Step ST154) The controller 370 gives the virtual machines 150 and 150a instructions to incorporate driver modules for virtual adapters 160b and 160c, respectively, on the FC interface 106a. In accordance with the instructions, the virtual machines 150 and 150a incorporate the virtual adapters 160b and 160c respectively. As a result, the virtual machines 150 and 150a can use the virtual adapters 160b and 160c respectively. The controller 370 registers the virtual adapters 160 and 160b as a pair in a redundant group in the redundant group management table stored in the management information storage section 360. Similarly, the controller 370 registers the virtual adapters 160a and 160c as a pair in a redundant group in the redundant group management table.

(Step ST155) The controller 370 adds port information corresponding to the virtual adapters 160b and 160c to zone information for an FC switch apparatus 200. This enables communication from the virtual adapters 160b and 160c via zones of the FC switch apparatus 200.

(Step ST156) The controller 370 gives the virtual machines 150 and 150a instructions to incorporate the storage apparatus 300 via the virtual adapters 160b and 160c respectively. In accordance with the instructions, the virtual machines 150 and 150a communicate with the storage apparatus 300 and bring about a state in which the storage apparatus 300 can be used via the virtual adapters 160b and 160c respectively. As a result, the virtual machine 150 can access the storage apparatus 300 via the virtual adapter 160b and the virtual machine 150a can access the storage apparatus 300 via the virtual adapter 160c.

(Step ST157) The controller 370 refers to the redundant group management table and checks that IO request states for the virtual adapters 160 and 160a have become "stopped". The controller 370 gives the virtual machines 150 and 150a instructions to perform virtual adapter switching. In accordance with the instructions, the virtual machine 150 performs switching from the virtual adapter 160 to the virtual adapter 160b and the virtual machine 150a performs switching from the virtual adapter 160a to the virtual adapter 160c.

(Step ST158) The controller 370 checks that all the virtual machines which share the FC interface 106 have already been transferred to the second FC interface and that communication is stopped for all the virtual adapters on the FC interface 106. The controller 370 gives the hypervisor 140 instructions to stop the FC interface 106. The hypervisor 140 shuts off the FC interface 106, turns off the power to the FC interface 106, and stops the FC interface 106.

(Step ST159) The controller 370 gives the hypervisor 140 instructions to disconnect the FC interface 106. The hypervisor 140 disconnects the FC interface 106 from the server apparatus 100. The FC interface 106 is in a state in which it can be removed from the server apparatus 100.

If the virtual machine 150 detects the failure in the virtual adapter 160, the controller 370 controls in this way virtual adapter switching performed by the virtual machine 150a which shares the FC interface 106 with the virtual machine 150. In step ST157 the controller 370 gives instructions to perform virtual adapter switching. At this time the order in which the virtual adapters 160 and 160a are switched is the order in which IO request states for them become "stopped".

As a result, the same effects that are obtained in the second embodiment are achieved. Furthermore, on the basis of a determination made by the storage apparatus 300, a failure in a virtual adapter is detected and adapter switching is controlled. As a result, switching is performed at high speed.

### (Seventh Embodiment)

A seventh embodiment will now be described. The differences between the above second through sixth embodiments and a seventh embodiment will mainly be described and descriptions of the same matters will be omitted.

In the examples of the second through sixth embodiments, the server apparatus 100 includes the FC interfaces 106 and 106a as physical adapters. On the other hand, the functions of the controller 141 can be used for physical adapters of another type. In a seventh embodiment a case where the functions of the controller 141 are applied to a server apparatus including FCoE (FC Over Ethernet (Ethernet is a registered trademark)) interfaces is taken as an example.

The entire structure of an information processing system according to a seventh embodiment is the same as the entire structure of the information processing system according to the second embodiment described in FIG. 2, so its description will be omitted. However, the information processing system according to the seventh embodiment includes a server apparatus 100b and an FCoE switch apparatus 200a in place of the server apparatus 100 and the FC switch apparatus 200 respectively. Furthermore, the FCoE switch apparatus 200a is connected to a network 20. A CEE (Converged Enhanced Ethernet) switch apparatus may be used in place of the FCoE switch apparatus 200a.

Furthermore, examples of hardware of the server apparatus 100b, the FCoE switch apparatus 200a, and a storage apparatus in the seventh embodiment are the same as those of hardware of the server apparatus, the FC switch apparatus, and the storage apparatus described in FIGS. 3 through 5 respectively, so their descriptions will be omitted. In the seventh embodiment the storage apparatus is indicated by the same numeral that is used in the second embodiment. The server apparatus 100b includes FCoE interfaces 106b and 106c in place of the FC interfaces 106 and 106a.

FCoE is a technique for transmitting FC data in Ethernet (registered trademark). With FCoE FC data is encapsulated within an Ethernet frame and is transmitted. The FCoE switch apparatus 200a performs FC communication with a storage apparatus 300. If the FCoE switch apparatus 200a and the storage apparatus 300 are connected via FCoE, then the FCoE switch apparatus 200a may perform FCoE communication with the storage apparatus 300. The FCoE switch apparatus 300a performs Ethernet communication with the network 20. The FCoE interfaces 106b and 106c are examples of an HBA.

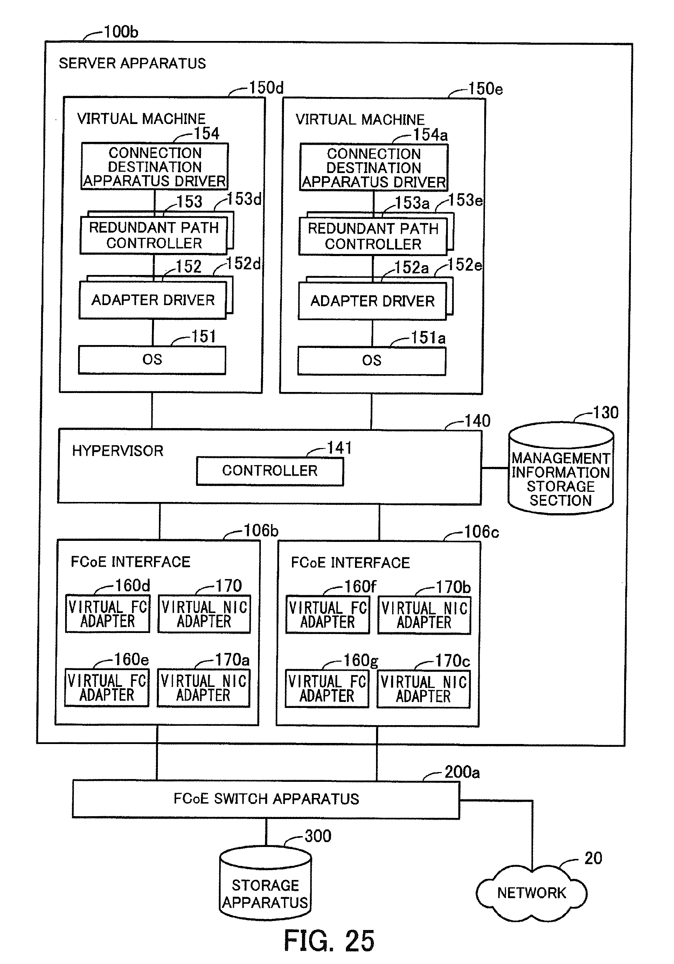

FIG. 25 is a block diagram of functions of the server apparatus in the seventh embodiment. The server apparatus 100b includes a management information storage section 130, a hypervisor 140, virtual machines 150d and 150e, virtual FC adapters 160d, 160e, 160f, and 160g, and virtual NIC adapters 170, 170a, 170b, and 170c.

A CPU 111 executes determined programs. By doing so, the functions of the management information storage section 130, the hypervisor 140, and the virtual machines 150d and 150e are realized on the server apparatus 100b. In addition, a controller in the FCoE interface 106b executes determined programs. By doing so, the functions of the virtual FC adapters 160d and 160e and the virtual NIC adapters 170 and 170a are realized on the FCoE interface 106b. Furthermore, a controller in the FCoE interface 106c executes determined programs. By doing so, the functions of the virtual FC adapters 160f and 160g and the virtual NIC adapters 170b and 170c are realized on the FCoE interface 106c. However, all or a part of these components may be realized by dedicated hardware.

The management information storage section 130 corresponds to the management information storage section 130 in the second embodiment. The hypervisor 140 corresponds to the hypervisor 140 in the second embodiment.

The virtual machines 150d and 150e correspond to the virtual machines 150 and 150a, respectively, in the second embodiment. The virtual machine 150d includes an OS 151, adapter drivers 152 and 152d, redundant path controllers 153 and 153d, and a connection destination apparatus driver 154.

The OS 151 and the connection destination apparatus driver 154 correspond to the OS 151 and the connection destination apparatus driver 154, respectively, in the second embodiment.

The adapter driver 152 is software for using a virtual FC adapter on the OS 151. The adapter driver 152d is software for using a virtual NIC adapter on the OS 151.

The redundant path controller 153 is software for realizing virtual FC adapter redundancy to improve the reliability of a FC communication path of the virtual machine 150d. The redundant path controller 153d is software for realizing virtual NIC adapter redundancy to improve the reliability of an Ethernet communication path of the virtual machine 150d.

The virtual machine 150e includes an OS 151a, adapter drivers 152a and 152e, redundant path controllers 153a and 153e, and a connection destination apparatus driver 154a.

The OS 151a and the connection destination apparatus driver 154a correspond to the OS 151a and the connection destination apparatus driver 154a, respectively, in the second embodiment.

The adapter drivers 152a and 152e correspond to the adapter drivers 152 and 152d respectively. The redundant path controllers 153a and 153e correspond to the redundant path controllers 153 and 153d respectively.

The virtual FC adapters 160d, 160e, 160f, and 160g are virtual FC adapters (examples of an accessor) realized by resources on the FCoE interfaces 106b and 106c respectively. The virtual machines 150d and 150e perform data communication with the storage apparatus 300 via FC by the use of the virtual FC adapters 160d, 160e, 160f, and 160g.

The virtual NIC adapters 170, 170a, 170b, and 170c are virtual NIC adapters (examples of an accessor) realized by resources on the FCoE interfaces 106b and 106c respectively. The virtual machines 150d and 150e perform data communication via Ethernet with an information processing apparatus connected to the network 20 by the use of the virtual NIC adapters 170, 170a, 170b, and 170c.

The virtual FC adapters 160d and 160e and the virtual NIC adapters 170 and 170a on the FCoE interface 106b are realized by a single physical port (including four virtual ports). For example, the virtual FC adapters 160d and 160e and the virtual NIC adapters 170 and 170a on the FCoE interface 106b may be realized by two physical ports. That is to say, the virtual FC adapters 160d and 160e may be realized by one physical port (including two virtual ports) and the virtual NIC adapters 170 and 170a may be realized by the other physical port (including two virtual ports). Even if this structure is adopted, a controller 141 can perform the same process that is performed in the second embodiment. To be concrete, the controller 141 performs a process in the following way.

For example, the virtual FC adapter 160d and the virtual NIC adapter 170 are assigned to the virtual machine 150d in a connection configuration management table 131 stored in the management information storage section 130. Similarly, the virtual FC adapter 160e and the virtual NIC adapter 170a are assigned to the virtual machine 150e in the connection configuration management table 131.

In addition, the virtual FC adapter 160d and the virtual FC adapter 160f are set as a pair in a redundant group in a redundant group management table 132 stored in the management information storage section 130. The virtual FC adapter 160e and the virtual FC adapter 160g are set as a pair in a redundant group in the redundant group management table 132. The virtual NIC adapter 170 and the virtual NIC adapter 170b are set as a pair in a redundant group in the redundant group management table 132. The virtual NIC adapter 170a and the virtual NIC adapter 170c are set as a pair in a redundant group in the redundant group management table 132.

It is assumed that the controller 141 receives notice of a failure in the virtual FC adapter 160d from the redundant path controller 153 of the virtual machine 150d. Then the controller 141 refers to the connection configuration management table 131 and specifies the virtual machine 150e which shares the FCoE interface 106b with the virtual machine 150d. The controller 141 assigns the virtual FC adapter 160f and the virtual NIC adapter 170b to the virtual machine 150d. The controller 141 assigns the virtual FC adapter 160g and the virtual NIC adapter 170c to the virtual machine 150e. The controller 141 gives the virtual machines 150d and 150e instructions to perform adapter switching based on this assignment.

When adapter switching is performed, the controller 141 incorporates in advance driver modules and a connection destination apparatus in the adapter drivers 152, 152a, 152d, and 152e and the redundant path controllers 153, 153a, 153d, and 153e. This is the same with the second through sixth embodiments.

When the redundant path controller 153d receives the instructions to perform adapter switching, the redundant path controller 153d switches a virtual NIC adapter from the virtual NIC adapter 170 to the virtual NIC adapter 170b.

Furthermore, when the redundant path controller 153a receives the instructions to perform adapter switching, the redundant path controller 153a switches a virtual FC adapter from the virtual FC adapter 160e to the virtual FC adapter 160g. In addition, the redundant path controller 153e switches a virtual NIC adapter from the virtual NIC adapter 170a to the virtual NIC adapter 170c.

As a result, the same effects that are obtained in the second embodiment are achieved. In particular, switching of virtual adapters of different types on the same physical adapter can be controlled. When notice of the failure in the virtual FC adapter 160d is received, the virtual machine 150d is given instructions to switch the virtual NIC adapter 170. Accordingly, even when the redundant path controller 153d does not detect a failure in the virtual NIC adapter 170, the redundant path controller 153d performs switching to the virtual NIC adapter 170b in accordance with the instructions.

When the controller 141 receives notice of a failure in the virtual NIC adapter 170 from the redundant path controller 153d, the controller 141 also controls in the same way adapter switching performed by the virtual machines 150d and 150e.

Each of the redundant path controllers 153, 153a, 153d, and 153e performs virtual adapter switching after it checks that the virtual machine 150d or 150e can access the storage apparatus 300 before and after the virtual adapter switching. This is the same with the second embodiment. In addition, each of the redundant path controllers 153, 153a, 153d, and 153e performs virtual adapter switching at timing at which the virtual machine 150d or 150e is not accessing the storage apparatus 300 via a virtual adapter.

Furthermore, the controller 141 may include the functions of the redundant path controllers 153, 153a, 153d, and 153e. This is the same with the third embodiment. In addition, virtual adapters, such as virtual FC adapters and virtual NIC adapters, via which communication is performed in accordance with protocols of different types are used. However, virtual adapters via which communication is performed in accordance with the same protocol may be used.

Moreover, in the examples of the second through seventh embodiments FC interfaces or FCoE interfaces are used. However, the same applies to a case where other physical adapters are used. For example, the controller 141 can also control adapter switching in the same way between NIC interfaces, SAS interfaces, Infiniband interfaces, or PCI Express interfaces.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

## Claims

1. An information processing apparatus on which a plurality of virtual machines can operate and on which a plurality of interface sections used for access from the plurality of virtual machines to a device can be mounted, the information processing apparatus comprising:
a storage section which stores information indicative of an interface section, of the plurality of interface sections, used by each of the plurality of virtual machines for access; and
a control section which refers to the storage section at the time of an error occurring in access performed by a first virtual machine by the use of a first interface section, which specifies a second virtual machine that uses the first interface section, and which switches an interface section to be used by the second virtual machine from the first interface section to a second interface section mounted on the information processing apparatus.

2. The information processing apparatus according to claim 1, wherein:
the first interface section includes a plurality of resources;
a first resource and a second resource, of the plurality of resources, are assigned to the first virtual machine and the second virtual machine respectively; and
when an error occurs in access performed by the first virtual machine by the use of the first resource, the control section switches an interface section to be used by the second virtual machine even when an error does not occur in access performed by the use of the second resource.

3. The information processing apparatus according to claim 1 or 2, wherein the control section exercises control so that switching to the second interface section is performed at timing at which the second virtual machine is not accessing the device.

4. The information processing apparatus according to any of claims 1 to 3, wherein after checking that the device which can be accessed by the use of the first interface section can be accessed by the use of the second interface section, the control section exercises control so that switching to the second interface section is performed.

5. The information processing apparatus according to any of claims 1 to 4, wherein the control section detects on the basis of notice from the first virtual machine that an error occurs in access performed by the first virtual machine by the use of the first interface section.

6. An information processing apparatus which communicates with another information processing apparatus on which a plurality of virtual machines can operate and on which a plurality of interface sections used for access from the plurality of virtual machines to a device can be mounted, the information processing apparatus comprising:
a storage section which stores information indicative of an interface section, of the plurality of interface sections, used by each of the plurality of virtual machines for access; and
a control section which refers to the storage section at the time of an error occurring in access performed by a first virtual machine by the use of a first interface section, which specifies a second virtual machine that uses the first interface section, and which switches an interface section to be used by the second virtual machine from the first interface section to a second interface section mounted on the information processing apparatus.

7. A virtual machine control method adopted by an information processing apparatus on which a plurality of virtual machines can operate and on which a plurality of interface sections used for access from the plurality of virtual machines to a device can be mounted or another information processing apparatus which communicates with the information processing apparatus, the virtual machine control method comprising:
detecting that an error occurs in access performed by a first virtual machine by the use of a first interface section;
referring to a storage apparatus which stores information indicative of an interface section, of the plurality of interface sections, used by each of the plurality of virtual machines for access and specifying a second virtual machine which uses the first interface section; and
switching an interface section to be used by the second virtual machine from the first interface section to a second interface section mounted on the information processing apparatus.

8. A program for controlling a computer on which a plurality of virtual machines can operate and on which a plurality of interface sections used for access from the plurality of virtual machines to a device can be mounted, the program causing the computer or another computer which communicates with the computer to perform a procedure comprising:
detecting that an error occurs in access performed by a first virtual machine by the use of a first interface section;
referring to a storage apparatus which stores information indicative of an interface section, of the plurality of interface sections, used by each of the plurality of virtual machines for access and specifying a second virtual machine which uses the first interface section; and
switching an interface section to be used by the second virtual machine from the first interface section to a second interface section mounted on the computer.
